Europäisches Patentamt

European Patent Office

Office européen des brevets

(19)

(11) **EP 1 432 249 A1**

(12) **EUROPEAN PATENT APPLICATION**
published in accordance with Art. 158(3) EPC

(43) Date of publication:
**23.06.2004 Bulletin 2004/26**

(51) Int Cl.⁷: **H04N 7/32**

(21) Application number: **02758839.1**

(22) Date of filing: **12.08.2002**

(86) International application number:
**PCT/JP2002/008227**

(87) International publication number:
**WO 2003/030556 (10.04.2003 Gazette 2003/15)**

(84) Designated Contracting States:
**AT BE BG CH CY CZ DE DK EE ES FI FR GB GR
IE IT LI LU MC NL PT SE SK TR**

(30) Priority: **18.09.2001 JP 2001283265
11.04.2002 JP 2002109009**

(71) Applicant: **Matsushita Electric Industrial Co., Ltd.
Kadoma City, Osaka 571-8501 (JP)**

(72) Inventors:
• **HAGAI, Makoto
Moriguchi-shi, Osaka 570-0051 (JP)**

• **KADONO, Shinya
Nishinomiya-shi, Hyogo 663-8113 (JP)**
• **KONDO, Satoshi
Yawata-shi, Kyoto 614-8361 (JP)**
• **ABE, Kiyofumi
Kadoma-shi, Osaka 571-0074 (JP)**

(74) Representative: **Eisenführ, Speiser & Partner
Patentanwälte Rechtsanwälte
Postfach 10 60 78
28060 Bremen (DE)**

(54) **IMAGE ENCODING METHOD AND IMAGE DECODING METHOD**

(57)    A picture coding apparatus (400), which employs pixel interpolation for generating a predictive picture, selects either a pixel interpolating unit A (403) or a pixel interpolating unit B (404) according to the value of a picture type signal PicType. When the value of the picture type signal PicType is "0" indicating a B picture, the pixel interpolating unit A (403), which is embodied by a pixel filter whose filter tap number is "4", for calculating a pixel value of a half pixel in the predictive picture is selected, and when the value of the picture type signal PicType is "1" indicating a picture other than a B picture, the pixel interpolating unit B (404), which is embodied by a pixel filter whose filter tap number is "8", is selected.

Fig. 4

EP 1 432 249 A1

**Description**

**Technical Field**

The present invention relates to a picture coding apparatus, a picture decoding apparatus, a picture coding method, a picture decoding method for compressing and coding a picture signal by predicting picture motion, and a recording medium that stores a program for carrying out such methods as software.

**Background Art**

With the development of multimedia applications, it has become common in recent years to handle information of all sorts of media such as video, audio, and texts in an integrated manner. In so doing, it is possible to handle media integrally by digitalize all media. However, since the amount of information contained in a digitalized picture is enormous, compression techniques for picture information are of absolute necessity for its storage/transmission. Meanwhile, in order to interoperate compressed picture data, the standardization of compression techniques is also important. Standards on picture compression techniques include H.261 and H.263 of ITU-T (International Telecommunication Union Telecommunication Standardization Sector) and MPEG (Moving Picture Experts Group)-1, MPEG-2, and MPEG-4 of ISO (International Organization for Standardization).

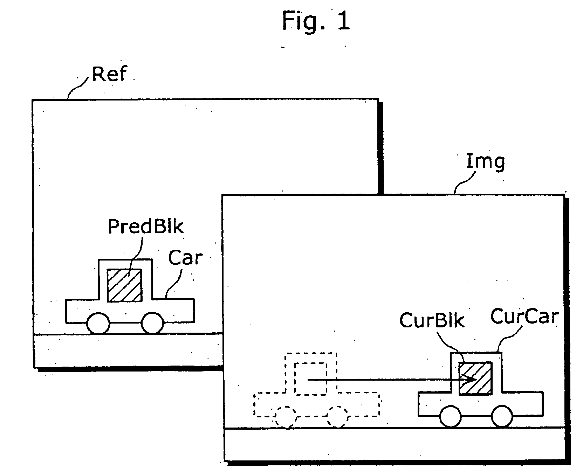

Fig.1 is a diagram showing a concept of motion compensation in a moving picture. Note that a subject Car in a reference picture signal Ref and a subject CurCar in an inputted picture signal Img are the same subject. Also note that a subject represented by a broken line in the picture signal Img indicates the position of the subject in the reference picture signal Ref. When a picture coding apparatus codes a pixel block CurBlk within the picture signal Img, higher prediction efficiency can be achieved by using, as a predictive picture signal Pred, pixels of a predictive picture block PredBlk in the reference picture signal Ref which indicates the same image as the subject CurCar and which indicates an image at a position corresponding to the position of the subject in the picture of the subject CurCar. In other words, by moving the image in the reference picture signal Ref indicating the subject CurCar to the same position as that of the subject CurCar in the picture signal Img so as to determine the differential in their pixel values, there is a smaller absolute value of the differential in the pixel values as well as a smaller amplitude in the amount of data, resulting in an easier compression. Information required for mapping from the pixel position of the predictive picture block PredBlk to the pixel position of the pixel block CurBtk is referred to as a motion parameter signal MotionParam. As such a motion parameter signal MotionParam, MPEG-1, 2 and 4, and H.261 and H263, for example, employ a motion vector representing parallel movements of blocks.

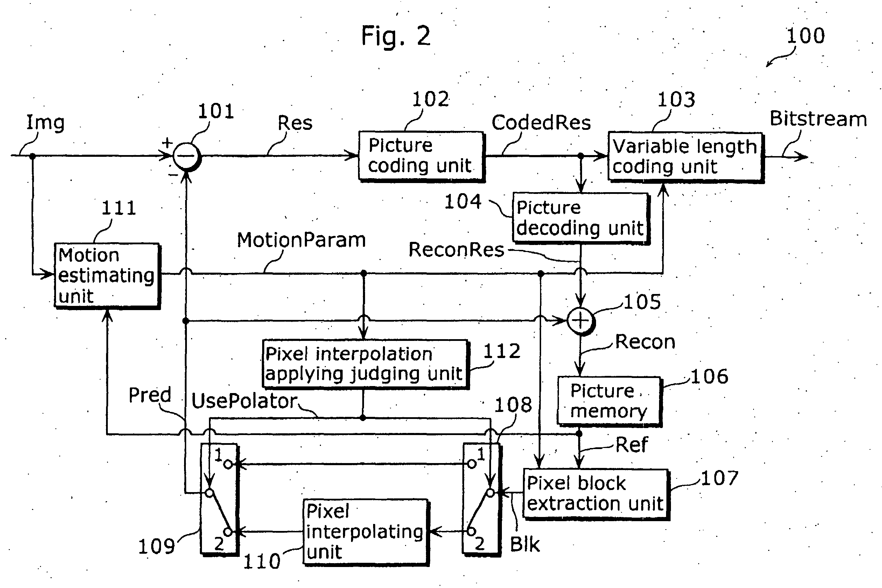

Fig.2 is a block diagram showing the configuration of an existing picture coding apparatus 100. Such picture coding apparatus 100 is comprised of a differential calculator 101, a picture coding unit 102, a variable length coding unit 103, a picture decoding unit 104, an adder 105, a picture memory 106, a pixel block extraction unit 107, a switch 108, a switch 109, a pixel interpolating unit 110, a motion estimating unit 111, and a pixel interpolation applying judging unit 112. First, the picture coding apparatus 100 acquires a picture signal Img from outside. Next, the differential calculator 101 outputs a differential picture signal Res which is the differential of pixel values between the picture signal Img inputted from outside and a predictive picture signal Pred acquired from a reference picture signal Ref. The predictive picture signal Pred, which is an already coded picture, is a picture which has been decoded by the picture decoding unit 104, interpolated by the pixel interpolating unit 110 according to necessity, and extracted on a per block basis according to a motion vector from the motion estimating unit 111. The picture coding unit 102 codes the differential picture signal Res, and outputs a coded differential picture signal CodedRes. Since inter picture motion compensation is not conducted in the case of intra picture coding, the pixel value of a predictive picture is regarded as "0".. The variable length coding unit 103 performs variable length coding for the coded differential picture signal CodedRes and a motion parameter signal MotionParam, and outputs them to outside the picture coding apparatus 100 as a single coded signal Bitstream. The picture decoding unit 104 decodes the coded differential picture signal CodedRes and outputs a decoded differential picture signal ReconRes in order to utilize it as a reference picture in motion estimation. The adder 105 adds pixel values of the decoded differential picture signal ReconRes and of the predictive picture signal Pred, and outputs the result as a decoded picture signal Recon. Such decoded picture signal Recon is stored in the picture memory 106 and used as a reference picture when the following pictures are coded. The picture memory 106 holds some of coded pictures outputted from the adder 105 as reference picture signals Ref for prediction purposes.

According to the motion vector from the motion estimating unit 111, the pixel block extraction unit 107 extracts a pixel block Blk from a picture stored in the picture memory 106 serving as a reference picture, and outputs it to the switch 108. The switch 108 makes a switch between a terminal "1" and a terminal "2" according to an interpolation judgment signal UsePolator from the pixel interpolation applying judging unit 112. The terminal "1" is connected to a terminal "1" of the switch 109, and the terminal "2" is connected to the pixel interpolating unit 110. When the amount of block movement indicated by a motion vector includes the amount of movement in a unit smaller than an integer pixel, the pixel interpolating unit 110 generates the pixel value of the position corresponding to it, and outputs such value to the terminal "2" of the switch 109. The switch 109 makes a connection by switching between the terminal "1" and the terminal "2" according to the interpolation judgment signal UsePolator from the pixel interpolation, applying judging unit 112. The motion estimating unit 111 determines a motion parameter signal MotionParam from the picture signal Img inputted from outside and the reference picture signal Ref. The pixel interpolation applying judging unit 112 judges whether to perform pixel interpolation or not when generating a predictive picture signal Pred from the reference picture signal Ref, according to the motion parameter signal MotionParam determined by the motion estimating unit 111.

In other words, there is a case where higher prediction efficiency can be achieved when a prediction is carried out by the use of motion in a unit smaller than an integer pixel, depending on motion of the subject illustrated in Fig.1, and pixel interpolation is generally employed for calculating pixel values of a predictive picture which includes motion in a unit smaller than an integer pixel. Such pixel interpolation is conducted by applying filtering for pixel values of a reference picture by means of linear filtering. An increased number of taps in such linear filtering realizes a filter with desirable frequency properties, resulting in higher prediction efficiency as well as in a larger processing amount. A smaller number of filter taps, on the other hand, leads to a filter with undesirable frequency properties, resulting in lower prediction efficiency as well as in a smaller processing amount.

The pixel interpolation applying judging unit 112 judges whether to perform pixel interpolation or not in generating a predictive picture, according to the motion parameter MotionParam. To be more specific, when the motion parameter signal MotionParam includes the amount of movement in a unit smaller than an integer pixel, the pixel interpolation applying judging unit 112 judges that pixel interpolation is to be employed, and outputs a pixel interpolation use control signal UsePolator of the value "1". When the motion parameter signal MotionParam indicates motion in integer pixel units, it is judged that pixel interpolation should not be employed, and a pixel interpolation use control signal UsePolator of the value "0" is outputted. When a pixel interpolation use control signal UsePolator is "0", the switch 108 and the switch 109 make a switch to the terminals "1", and when a pixel interpolation use control signal' UsePolator is "1", the switch 108 and the switch 109 make a switch to the terminals "2". The pixel interpolating unit 110 is used when the switch 108 and the switch 109 are connected to the terminals "2" so as to perform pixel interpolation for a pixel block Blk to be used as a predictive picture signal Pred. When the switch 108 and the switch 109 are "0", pixel interpolation is not to be conducted, and a pixel block Blk is used as a predictive picture signal Pred as it is.

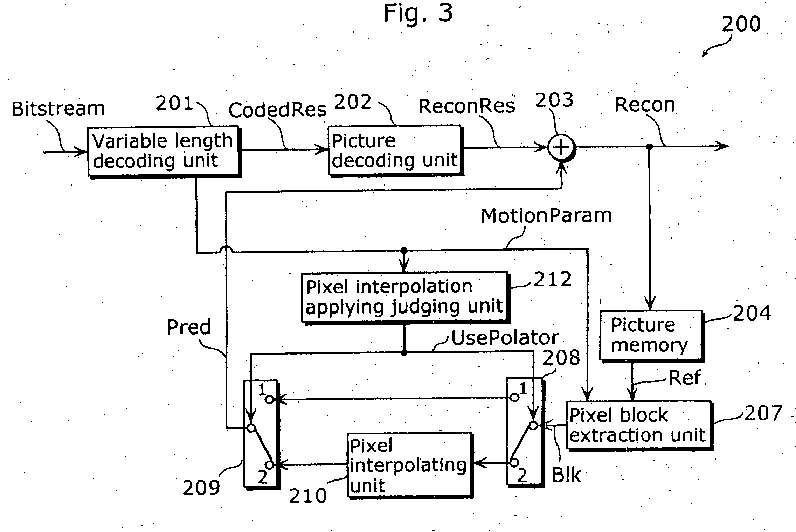

Fig.3 is a block diagram showing the configuration of an existing picture. decoding apparatus 200. First, the picture decoding apparatus 200 acquires the coded signal Bitstream from outside. Then, a variable length decoding unit 201 performs variable length decoding for the coded signal Bitstream so as to demultiplex it into coded differential picture signals CodedRes and motion parameter signals MotionParam. A picture decoding unit 202 decodes a coded differential picture signal CodedRes, and outputs it as a decoded differential picture signal ReconRes. An adder 203 adds the predictive picture signal Pred with the decoded differential picture signal ReconRes, and outputs the result as a decoded picture signal Recon. Furthermore, some decoded picture signals Recon are to be stored in a picture memory 204 as reference picture signals Ref. A pixel block extraction unit 207 extracts a combination of pixels from a position, within a reference picture signal Ref, indicated by the motion parameter signal MotionParam (there is a case, however, where an area larger than an actual prediction block is extracted due to interpolation processing).

A pixel interpolation applying judging unit 212 judges whether to employ pixel interpolation or not for the acquisition of a predictive picture, according to the motion parameter signal MotionParam. For example, when a motion vector indicates a parallel movement of a pixel block as in the case of MPEG-1, 2 and 4, it is possible to judge whether to use pixel interpolation or not according to whether such motion vector can be divided by an integer or' not. The pixel interpolation applying judging unit 212 outputs a pixel interpolation use control signal UsePolator of the value "1" when judging that pixel interpolation should be used, and outputs a pixel interpolation use control signal UsePolator of the value "0" when judging that pixel interpolation should not be used. When a pixel interpolation use control signal UsePolator is "0", the switch 208 and the switch 209 make a switch to the terminals "1", and when a pixel interpolation use control signal UsePolator is "1", the switch 208 and the switch 209 makes a switch to the terminals "2". Pixel interpolation by the pixel interpolating unit 210 is used when the switch 208 and the switch 209 are "2", and pixel interpolation is performed for a pixel block Blk so as to be used as a predictive picture signal Pred. When the switch 208 and the switch 209 are connected to terminals "1", pixel interpolation is not to be conducted, and a pixel block Blk is used as a predictive picture signal Pred as it is.

However, since mobile devices such as cell phones and PDAs (Personal Digital Assistants) are configured to minimize power consumption in order that a battery as a power source can be used for longer hours, only a computing unit with a low processing capability can be used, resulting in the case where only a pixel interpolation method capable of a small amount of processing can be used. Meanwhile, it is sometimes required that a pixel interpolation method that involves a larger amount of processing but that offers high prediction efficiency is used for some pictures in order to achieve high coding efficiency. If moving picture coding methods are capable of responding to such requirements flexibly, it is useful, with the range of application expanding.

In view of the above problems, the present invention aims at providing a picture coding method and a picture decoding method capable of selecting a different pixel interpolation method depending on a picture signal to be coded.

**Disclosure of Invention**

In order to achieve the above object, the picture coding method according to the present invention is a picture coding method that uses pixel interpolation for generating a predictive picture comprising: a selecting step for selecting one pixel interpolation method from a plurality of pixel interpolation methods; and a pixel value generating step' for generating a pixel value corresponding to a target pixel position using the selected pixel interpolation method.

Thus, according to the picture coding apparatus of the present invention, it is possible to generate a coded signal appropriate to the processing power of a picture coding apparatus and the processing power of a picture decoding apparatus that receives the coded signal, by selecting one pixel interpolation method from the plurality of pixel interpolation methods.

Also, in order to achieve the above object, another picture coding apparatus according to the present invention is a picture coding method for performing pixel interpolation for a decoded picture and generating a predictive picture comprising: a decoding step for decoding an input coded signal; a storing step for storing the decoded picture decoded in the decoding step; a selecting step for selecting a pixel interpolation method involving a light power processing load from a plurality of pixel interpolation methods, when the decoded picture is a picture not to be referred to by other pictures; and a predictive picture generating step for generating the predictive picture using the selected pixel interpolation method.

Furthermore, in order to achieve the above object, another picture coding apparatus according to the present invention is a picture coding method for performing pixel interpolation for a decoded picture and generating a predictive picture comprising: a decoding step for decoding an input coded signal; a storing step for storing the decoded picture decoded in the decoding step; a selecting step for selecting a pixel interpolation method involving a light power processing load from a plurality of pixel interpolation methods, when the decoded picture is a B picture which refers to a plurality of pictures; and a predictive picture generating step for generating the predictive picture using the selected pixel interpolation method.

Moreover, in order to achieve the above object, another picture coding apparatus according to the present invention is a picture coding method for performing pixel interpolation for a decoded picture and generating a predictive picture comprising: a decoding step for decoding an input coded signal; a storing step for storing the decoded picture decoded in the decoding step; a selecting step for selecting a pixel interpolation method involving a lighter power processing load from a plurality of pixel interpolation methods than in a case of a P picture which refers to one picture, when the decoded picture is a B picture which refers to a plurality of pictures; and a predictive picture generating step for generating the predictive picture using the selected pixel interpolation method.

Also, in order to achieve the above object, the picture decoding method according to the present invention is a picture decoding method for performing pixel interpolation for a decoded picture and generating a predictive picture comprising:..a selecting step for selecting a pixel interpolation method involving a light power processing load from a plurality of pixel interpolation methods, when the decoded picture to be obtained as a result of decoding an input coded signal is a picture not to be referred to by another decoded picture to be obtained as a result of decoding the coded signal; and a predictive picture generating step for generating the predictive picture using the selected pixel interpolation method.

Thus, according to the picture decoding apparatus of the present invention, since a pixel interpolation method involving a light power processing load is selected for a picture no to be referred to by other pictures, other pictures are not effected by the degradation of picture quality caused by generating a pixel value by the use of.a pixel interpolation method which involves a light power processing load for a predictive picture to be generated using such picture, and reduction can be made in power processing load in picture decoding processing from an overall point of view.

Furthermore, in order to achieve the above object, another picture decoding method according to the present invention is a picture decoding method for performing pixel interpolation for a decoded picture and generating a predictive picture comprising: a selecting step for selecting a pixel interpolation method involving a light power processing load from a plurality of pixel interpolation methods, when the decoded picture to be obtained as a result of decoding an input coded signal is a B picture which refers to a plurality of pictures; and a predictive picture generating step for generating the predictive picture using the selected pixel interpolation method.

Moreover, in order to achieve the above object, the picture coding method and the picture decoding method according to the present invention is a picture decoding method for performing pixel interpolation for a predictive picture comprising: a selecting step for selecting a pixel interpolation method involving a light power processing load from a plurality of pixel interpolation methods, when a plurality of pictures are referred to for prediction; and a predictive picture generating step for generating a pixel value of the predictive picture using the selected pixel interpolation method.

Thus, according to the picture coding apparatus and the picture decoding apparatus of the present invention, since a pixel interpolation method involving a light power processing load is selected when the number of pictures to be referred to for prediction is more than one and when a prediction involving a heavy power processing load is carried out, reduction can be made in the power processing load of the picture coding and picture decoding of such picture, and power processing load in picture coding and picture decoding processes can be smoothed as a whole.

**Brief Description of Drawings**

Fig. 1 is a diagram showing a concept of motion compensation in a moving picture.
Fig.2 is a block diagram showing a configuration of.an existing picture coding apparatus.
Fig.3 is a block diagram showing a configuration of an existing picture decoding apparatus.
Fig. 4 is a block diagram showing a configuration of a picture coding apparatus according to the present invention.
Fig.5 is a block diagram showing a configuration of a picture decoding apparatus according to the present invention.
Fig.6A is a diagram showing an example method for calculating, in a half pixel fitter, the pixel value of a pixel which is located at a position half pixel off a real pixel in the direction of i axis. Fig. 6B is a diagram showing an example method for calculating, in a half pixel filter, the pixel value of a pixel which is located at a position half pixel off a real pixel in the direction of j axis.
Fig.7A is a diagram showing a relationship between the picture type of each picture representing a moving picture and pixel interpolation methods. Fig.7B is a flowchart showing a procedure of selecting an interpolation method in the picture coding apparatus and the picture decoding apparatus according to the present invention.
Fig.8 is a block diagram showing a configuration of a picture coding apparatus that makes a switch of pixel interpolation methods on a per picture basis.
Fig.9 is a flowchart showing a procedure of selecting an interpolation method in the picture coding apparatus.
Fig.10A is a diagram showing a stream structure of a coded signal Bitstream according to the present invention. Fig.10B is a diagram showing a coded signal Bitstream in the case where pixel interpolation methods are switched on a per picture basis.
Fig. 11 is a block diagram showing a configuration of another picture decoding apparatus according to the present embodiment.
Fig.12 is a diagram showing an example of an interpolation type table which a pixel interpolation type changing unit illustrated in Fig. 11 holds.
Fig.13 is a block diagram showing a configuration of a picture coding apparatus according to the second embodiment of the present invention.
Fig.14 is a block diagram showing a configuration of a picture decoding apparatus for decoding a coded signal Bitstream3, which is an output of the picture coding apparatus illustrated in Fig.13.
Fig.15 is a diagram explaining the case where processing is performed in a computer system using a flexible disk which stores the picture coding method or the picture decoding method of the first to third embodiments. Fig. 15A illustrates an example physical format of the flexible disk as a recording medium itself. Fig.15B shows an external view of the flexible disk viewed from the front, a schematic cross-sectional view and the flexible disk, while Fig. 15C shows a structure for recording and reading out the program on and from the flexible disk FD.
Fig. 16 is a block diagram showing an overall configuration of a content supply system for realizing a content distribution service.
Fig.17 is a diagram showing an example of a cell phone.
Fig.18 is a block diagram showing a configuration of the cell phone.
Fig.19 is a diagram explaining a device for performing coding processing or decoding processing shown in the aforementioned embodiments as well as a system utilizing such device.

**Best Mode for Carrying Out the Invention**

The following explains concrete embodiments of the present invention with reference to the figures.

(First Embodiment)

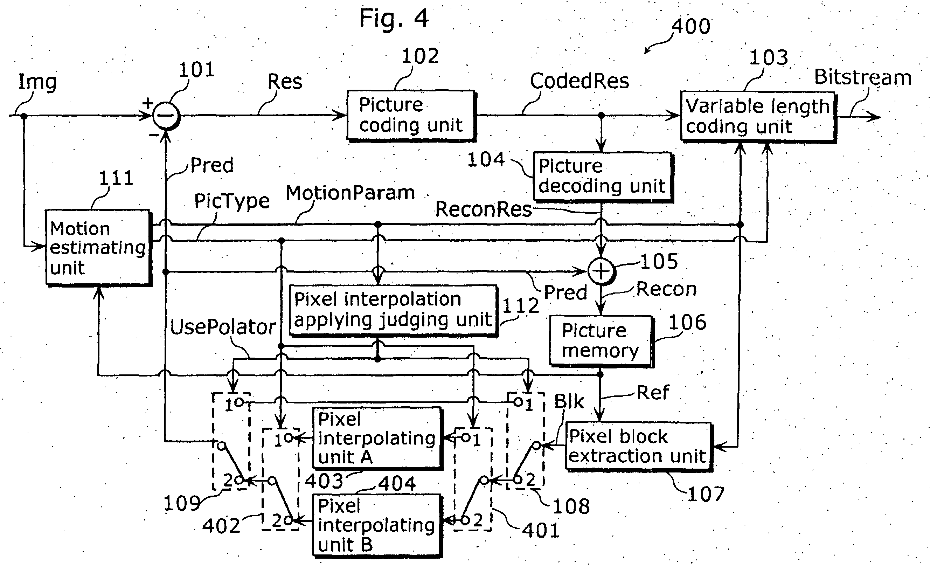

Fig.4 is a block diagram showing the configuration of a picture coding apparatus 400 according to the present invention. Note that the same reference numbers are assigned to the same constituent elements which operate in the same manner and the same signals as those of the existing picture coding apparatus 100 illustrated in Fig.2, and explanations thereof are omitted.
The picture coding apparatus 400 is a picture coding apparatus for selectively performing pixel interpolation of different degrees of accuracy according to a picture type signal PicType to be inputted from outside, and is comprised of the differential calculator 101, the picture coding unit 102, the variable length coding unit 103, the picture decoding unit 104, the adder 105, the picture memory 106, the pixel block extraction unit 107, the switch 108, the switch 109, a switch 401, a switch 402, a pixel interpolating unit A403, a pixel interpolating unit B404, the motion estimating unit 111, and the pixel interpolation applying judging unit 112. The picture coding apparatus 400 acquires a picture signal Img including a picture type signal PicType from outside. For example, when "1" indicating a B picture, which is not usually referred to by other pictures, is inputted to the switch 401 and the switch 402 as a picture type signal PicType, the switch 401 and the switch 402 make a switch to the terminals "1", and pixel interpolation is performed by the pixel interpolating unit A403. In other words, when the switch 401 and the switch 402 are connected to the terminals "1", pixel interpolation by the pixel interpolating unit A403 is performed for a pixel block signal Blk. In the pixel interpolating unit A403, a simplified interpolation method with a small number of fitter taps of "4", for example, is employed. When "2" indicating a P picture to be referred to by other pictures, i.e., a value other than "1" indicating a B picture, is inputted as a picture type signal PicType, the switch 401 and the switch 402 switch to the terminals "2", and pixel interpolation by the pixel interpolating unit B404 is applied to a pixel block signal Blk. In the pixel interpolating unit B404, a highly accurate interpolation method with a large number of filter taps of "8", for example, is employed. The pixel block Blk for which pixel interpolation has been performed in such manner is inputted to the differential calculator 101 as a predictive picture signal Pred.

Note that since a B picture generates a predictive picture by referring to two pictures at the same time, pixel interpolation is required for each picture to be referred to. Accordingly, the amount of computation required for pixel interpolation doubles as compared to a P picture which refers to only one picture, meaning that the use of a simplified interpolation method for a B picture is effective also in that the amount of computation required for each picture can be smoothed. Therefore, it is useful if a simplified interpolation method is used for a B picture to be referred to by other pictures.

Also note that values "2", "1" and "0" indicating picture type signals PicType are values which are defined only for explanation purposes, and therefore that any value can substitute them as long as a distinction can be made between a plurality of pixel interpolation methods by such value. By notifying a picture decoding apparatus of picture type signals PicType indicating pixel interpolation methods which have been used, it is possible for the picture decoding apparatus to employ the same pixel interpolation methods as employed by a pixel interpolating unit used by a picture coding apparatus.

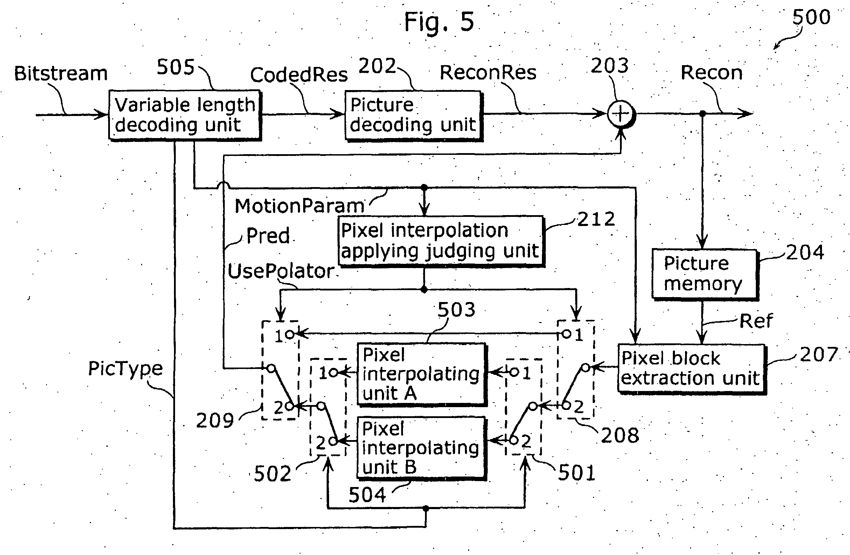

Fig.5 is a block diagram showing the configuration of a picture decoding apparatus 500 according to the present invention. Note that, in this diagram, since explanations are already given for constituent elements equivalent to those of the picture decoding apparatus 200 illustrated in Fig.3, the same numbers are assigned to such constituent elements and explanations thereof are omitted. The picture decoding apparatus 500 is a picture decoding apparatus that decodes a coded signal Bitstream in which different pixel interpolation methods are used on a per picture type basis, and is comprised of a variable length decoding unit 505, the picture decoding unit 202, the adder 203, the picture memory 204, the pixel block extraction unit 207, the switch 208, the switch 209, the pixel interpolation applying judging unit 212, a switch 501, a switch 502, a pixel interpolating unit A503, and a pixel interpolating unit B504. In the picture decoding apparatus 500, the variable length decoding unit 505 performs variable length decoding for the coded signal Bitstream inputted from outside, demultiplexes picture type signals PicType, coded differential picture signals CodedRes, and motion parameter signals MotionParam from the coded signal Bitstream for which variable length decoding has been performed, and outputs the picture type signals PicType to the switch 501 and the switch 502, the motion parameter signals MotionParam to the pixel interpolation applying judging unit 212 and the pixel block extraction unit 207, and the coded differential picture signals CodedRes to the picture decoding unit 202 respectively. For example, when "1" indicating a B picture, which is not referred to by other pictures, is inputted to the switch 501 and the switch 502 as a picture type signal PicType, the switch 501 and the switch 502 make a switch to the terminals "1", . and pixel interpolation by the pixel interpolating unit A503 is performed. In other words, when the switch 501 and the switch 502 are connected to the terminals "1", pixel interpolation by the pixel interpolating unit A503 is employed for a pixel block signal Blk. In the pixel interpolating unit A503, a simplified interpolation method with a small number of filter taps of "4", for example, is employed. When "2" indicating a P picture to be referred to by other pictures, i.e., a value other than "1" indicating a B picture, is inputted as a picture type signal PicType, the switch 501 and the switch 502 switch to the terminals "2", and pixel interpolation by the pixel interpolating unit B504 is applied to the pixel block signal Blk. In the pixel interpolating unit B504, a highly accurate interpolation method with a large number of filter taps of "8", for example, is employed.

Note that since a B picture generates a predictive picture by referring to two pictures at the same time, pixel interpolation is required for each picture to be referred to. Accordingly, the amount of computation required for pixel interpolation doubles as compared to a P picture which refers to only one picture, meaning that the use of a simplified interpolation method for a B picture is effective also in that the amount of computation required for each picture can be smoothed. Therefore, it is useful if a simplified interpolation method is also used for a B picture to be referred to by other pictures.

Furthermore, when decoding a bit stream in which a single pixel interpolation filter is used in a picture coding apparatus for both P and B pictures, it is possible for the picture decoding apparatus 500 to use a simplified pixel interpolation filter only for a B picture. In this case, since a pixel interpolation filter for a B picture is different from a pixel interpolation filter used in the picture coding apparatus, there occurs the degradation in the picture quality of the B picture. However, since a B picture is not much referred to by other pictures, there are fewer cases where the degradation in picture quality propagates to the following pictures, as compared to.the case where the degradation in picture quality of a P picture occurs.

Moreover, if the same pixel interpolation filter as used in the picture coding apparatus is not implemented in the picture decoding apparatus 500, it is possible to use a pixel interpolation filter whose number of taps is smaller than and closest to that of a pixel interpolation fitter used in the picture coding apparatus instead. In such case, there occurs picture quality degradation because of the fact that a pixel interpolation filter different from a pixel interpolation fitter used in the picture coding apparatus is used, but it is possible to carry on the decoding of the bit stream.

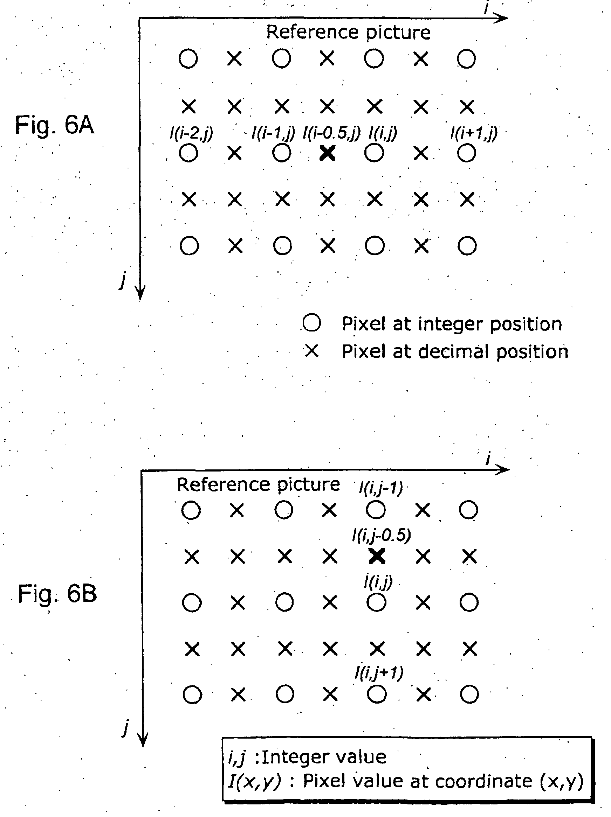

Fig.6A is a diagram showing an example method for calculating, in a half pixel filter, the pixel value of a pixel which is located at a position half pixel off a real (an actually decoded) pixel in the direction of i axis. Fig.6B is a diagram showing an example method for calculating, in a half pixel filter, the pixel value of a pixel which is located at a position half pixel off a real (an actually decoded) pixel in the direction of j axis. In Fig. 6A and Fig.6B, $\bigcirc$ indicates a pixel at integer position and $\times$ indicates a pixel at decimal position. Also in the diagrams, i and j are integers. I(x, y) indicates a pixel value at coordinate (x, y). A half pixel filter can be embodied by software, an integrated circuit and the like capable of calculating pixel values of pixels at decimal position, indicated by $\times$ , which do not actually exist, according to pixel values of pixels at integer position indicated by O. Fig.6A explains the case where a pixel value I (i-0.5, j) of the pixel located at coordinate (i-0.5, j) is determined. When the number of taps N (N is an even natural number) is "2", for example, a pixel value I (i-1, j) and a pixel value I (i, j) of the two adjacent pixels in the direction of i axis are utilized for the pixel located at coordinate (i-0.5, j). The pixel value I (i-0.5, j) can be represented as follows using Equation 1, which is the sum of products of pixel values in the direction of axis:

$$I(i\text{-}0.5,j)=\sum_{k=0}^{N} a_k \cdot I(i\text{-}trunc(N/2)+k,j) \qquad \cdots \text{ (Equation 1)}$$

In Equation 1, $a_k$ indicates a filter factor, while trunc(n) indicates the truncation of the fractional portion of n. In this manner, by selecting in advance an appropriate filter factor $a_k$ in Equation 1, the pixel value I (i-0.5, j) of the pixel located at a half pixel position (i-0.5, j) can be determined as an average value of N pixel values of pixels on both sides of it. Furthermore, when the number of taps N is "4", for example, a pixel value I (i-2, j) and a pixel value I (i+1, j) of the pixels on both sides in the direction of i axis, in addition to the pixel value I (i-1, j) and the pixel value I (i, j) of the two adjacent pixels in the direction of i axis, are further utilized for the pixel located at (i-0.5, j). Similarly, when the number of taps N increases to "6" and "8", the pixel value I (i-0.5, j) of the pixel located at a half pixel position (i-0.5, j) can be easily determined by substituting such values into N in Equation 1.

Fig.6B explains the case where a pixel-value I (i, j-0.5) of the pixel located at coordinate (i, j-0.5) is determined. In other words, this is the case where a predictive picture moves in the direction of j axis in the reference picture by the amount of a sub pixel. When the number of taps M (M is an even natural number) is "2", for example, a pixel value I (i, j-1) and a pixel value I (i, j) of the two adjacent pixels. in the direction of j axis are utilized for the pixel value located at coordinate (i, j-0.5). The pixel value I (i, j-0.5) can be represented as follows using Equation 2, which is the sum of products of pixels values in the direction of j axis:

$$I(i,j\text{-}0.5)= \sum_{m=0}^{M} a_m \cdot I(i,j\text{-}trunc(M/2)+m) \qquad \cdots \text{ (Equation 2)}$$

In Equation 2, $a_m$ indicates a filter factor. Likewise, when the number of taps increases to "4", "6" and "8", the pixel value of the pixel located at coordinate (i, j-0.5) can be easily determined by substituting such values into M in Equation 2.

Furthermore, although not illustrated in a diagram, when a predictive picture moves in the direction of i axis and the direction of j axis respectively in the reference picture by the amount of a half pixel, a pixel value I (i-0.5, j-0.5) located at coordinate (i-0.5, j-0.5) in the predictive picture can be represented as follows using Equation 3, which is the sum of products of pixel values in the direction of i axis and the direction of j axis:

$$I(i-0.5, j-0.5) = \sum_{m=0}^{M} \sum_{k=0}^{N} a_m \cdot a_k \cdot I(i-trunc(N/2)+k, j-trunc(M/2)+m)$$

$$\cdots \text{(Equation 3)}$$

As is obvious from the above equations, a pixel filter which realizes a pixel interpolating unit A and a pixel interpolating unit B offers higher prediction accuracy as the number of filter. taps increases, while the amount of computation processing becomes larger and power processing load on the picture coding apparatus becomes heavier.

As described above, a plurality of pixel interpolating units of different prediction performance/processing amount can be employed as pixel interpolating units of the picture coding apparatus 400 and the picture decoding apparatus 500. The advantage of using pixel. interpolating units of different prediction performance/processing amount is described below. In order to make an explanation easier, assume that the pixel interpolating units A is capable of handling the amount of processing smaller than that of the pixel interpolating unit B, and that the pixel interpolating units B offers higher predication efficiency than that of the pixel interpolating unit A. As a picture decoding apparatus that decodes a coded signal outputted by the picture coding apparatus according to the present invention, two types of picture decoding apparatuses are assumed: a picture decoding apparatus equipped only with the pixel interpolating unit A and a picture decoding apparatus equipped with both the pixel interpolating until A and the pixel interpolating unit B.

The former picture decoding apparatus is suitable for a device which is required to handle a small amount of processing and which has low processing power. The latter picture decoding apparatus is suitable for a device which handles a large amount of processing. The latter picture decoding apparatus is capable of decoding coded signals for which both the pixel interpolating unit A and the pixel interpolating unit B have been utilized, and providing upward compatibility with the former picture decoding apparatus. As the above explanation shows, by selecting a pixel interpolating unit of appropriate prediction performance/processing amount depending on a picture decoding apparatus, it becomes possible to employ the coding method to a wide variety of devices.

Furthermore, other than the purpose of generating a coded signal appropriate to the processing power of a picture decoding apparatus, it is also possible to switch between pixel interpolating units according to the processing power of a picture coding apparatus. For example, when the picture size and picture rate in coding are big, the amount of processing required for the entire coding process becomes large. Therefore, by using the pixel interpolating unit B when the picture size and picture rate in coding are at or below a certain value and by using the pixel interpolating unit A for which low processing power is required, i.e., which places a light power processing toad when the picture size and picture rate in coding are above a certain value, it is possible to control the amount of processing required for the entire coding process not to become large.

Moreover, when realizing picture coding on the time sharing system in which a plurality of processes are concurrently executed, there is a possibility that the amount of processing to be dedicated for picture coding changes dynamically due to other processes. Accordingly, it is possible to use the pixel interpolating unit B which handles a larger amount of processing, when the amount of processing to be dedicated to picture coding is at or over a certain level, and to use the pixel interpolating unit A which handles a smaller amount of processing, when the amount of processing to be dedicated to picture coding is at or below a certain level.

It is also possible that pixel interpolating units are switched on a per picture basis according to picture properties, with a plurality of pixel interpolating units suited for pictures of specific properties available. For example, when edge information is important such as in the case of characters, a pixel interpolating unit with a superior capability of storing edge is used. If a plurality of pixel interpolating units can be switched, it becomes possible to select a pixel interpolating unit appropriate to the properties of a picture, resulting in increased prediction efficiency.

Furthermore, since pixel interpolation is required for each picture to be referred to when a predictive picture is generated by referring to two pictures at the same time as in the case of a B picture and the like, the amount of computation required for pixel interpolation doubles as compared to a P picture which refers to only one picture. Therefore, by using a simplified interpolation method only for a B picture, the amount of computation required for each picture can be smoothed, allowing the present invention to be realized as software which operates in real time.

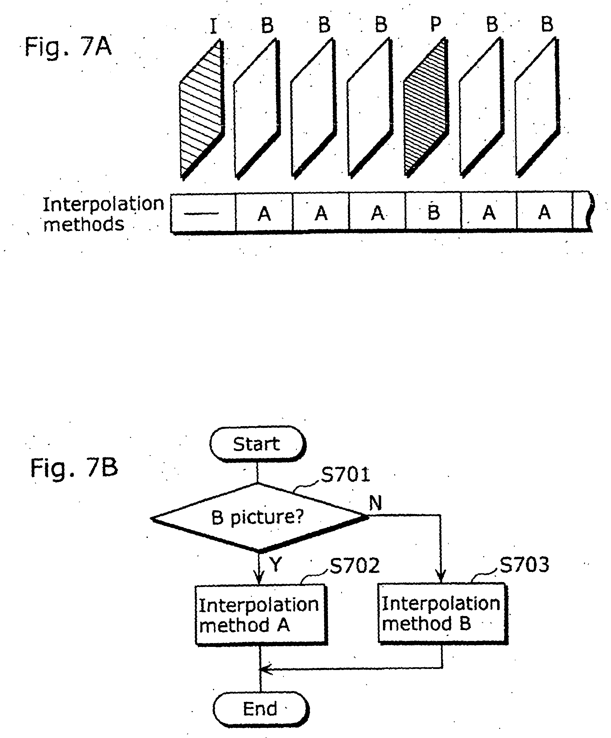

Fig.7A is a diagram showing a relationship between the picture type of each of the pictures representing a moving picture and pixel interpolation methods. Fig.7B is a flowchart showing the procedure of selecting an interpolation method in the picture coding apparatus 400 and the picture decoding apparatus 500 according to the present invention. As Fig. 7A illustrates, picture type signals PicType indicating whether each picture is an I picture, a B picture, or a P picture are provided, from outside, to the picture coding apparatus 400. In an I picture, the pixel values of a predictive picture is "0" since intra picture coding is performed. Therefore, the pixel interpolation applying judging unit 112 switches the switch 108 and the switch 109 to the terminals "1", and does not perform pixel interpolation itself. In a B picture, the switch 401 and the switch 402 are switched to the terminals "1" according to the value indicated by a picture type signal PicType, and a simple pixel interpolation A by the pixel interpolating unit A403 is used. In a P picture, the switch 401 and the switch 402 are switched to the terminals "2" according to the value indicated by a picture type signal PicType, and a highly accurate pixel interpolation B by the pixel interpolating unit B404 is used.

In other words, by switching the switch 401 and the switch 402 according to the value of a picture type signal PicType, the picture coding apparatus 400 performs a selection process illustrated in the flowchart of Fig. 7B. The switch 401 and the switch 402 make a judgment on whether the value of a picture type signal PicType to be inputted is a value indicating a B picture or not (S701), and if such value indicates a B picture, select the interpolation method A to be performed by the pixel interpolating unit A403 by getting connected to the respective terminals "1" (S702).

Furthermore, when the value of a picture type signal PicType does not indicate the value of a B picture, the switch 401 and the switch 402 select the interpolation method B to be performed by the pixel interpolating unit B404 by getting connected to the respective terminals "2" (S703). The picture coding apparatus 400 repeats the processing from the above steps S701 to S703 for each picture of the picture signal Img to be inputted.

As stated above; according to the picture coding apparatus 400, since a pixel interpolating unit that places a lighter power processing load is selected for a B picture which usually involves a comparatively heavy power processing load in picture coding processing, it becomes possible even for a picture coding apparatus with comparatively low processing power to carry out pixel interpolation. Moreover, since a pixel interpolating unit of lower accuracy is selected for a B picture which is less frequently referred to by other pictures, it is possible to restrain the influence of selecting a pixel interpolating unit of lower accuracy from propagating over other pictures. What is more, a selection of a pixel interpolating unit is usually made on the basis of a picture type signal PicType included in a picture signal, it is not necessary for a coded signal Bitstream to include information indicating which pixel interpolating unit is used for which picture, resulting in a reduced amount of processing to be performed by the variable length coding unit. Furthermore, since a pixel interpolating unit that involves a large amount of processing but that offers higher prediction accuracy is selected for a P picture which usually places a smaller processing amount on the picture coding apparatus, it is possible even for a picture coding apparatus with comparatively small processing power to perform pixel interpolation of higher accuracy. Moreover, since it is possible to perform pixel interpolation of higher prediction accuracy for a P picture to be referred to by other pictures, the degradation in picture quality can be minimized.

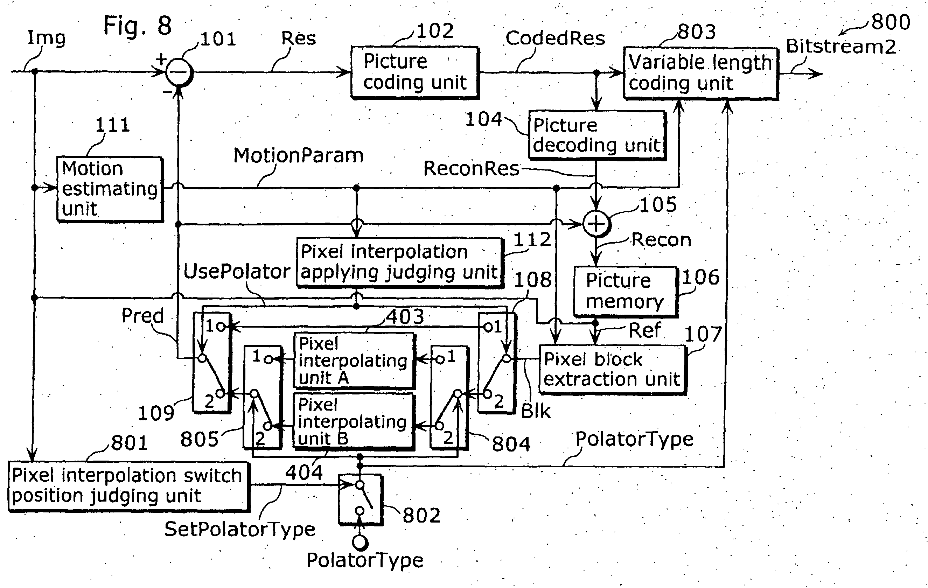

Fig. 8 is a block diagram showing the configuration of a picture coding apparatus 800 that makes a switch of pixel interpolation methods on a per picture basis. In Fig.8, the same numbers are assigned to the same constituent elements and the same signals as those of the picture coding apparatus 100 illustrated in Fig.2 and the picture coding apparatus 400 illustrated in Fig.4, and explanations thereof are omitted. The picture coding apparatus 800 is comprised of the differential calculator 101, the picture coding unit 102, the picture decoding unit 104, the adder 105, the picture memory 106, the pixel block extraction unit 107, the switch 108, the switch 109, the motion estimating unit 111, the pixel interpolation applying judging unit 112, the pixel interpolating unit A403, the pixel interpolating unit B404, a pixel interpolation switch position judging unit 801, a switch 802, a variable length coding unit 803, a switch 804 and a switch 805. If detecting from an inputted picture signal Img a unit (e.g. picture, slice, macroblock, block) by which the -switching is made between the pixel interpolating unit A403 and the pixel interpolating unit 8404, the pixel interpolation switch position judging unit 801 turns the switch 802 ON (in the conduction state) by outputting a pixel interpolation control Signal SetPolatorType"1".

Here, the switch 802 is switched, with a picture of the picture signal Img as a unit of switching pixel interpolation methods. The switch 802 has a functionality of letting a pixel interpolation type signal PolatorType into the switch 804 and the switch 805 only for a short period of time during which the top of each picture serving as a unit of switching comes, and interrupting a pixel interpolation type signal PolatorType from being inputted to the switch 804 and the switch 805 during the period of time other than the aforementioned unit of switching. This functionality is intended for preventing switching from being made between the pixel interpolating unit A403 and the pixel interpolating unit B404 while coding is being performed for the unit of switching. When the switch 802 is turned ON by the pixel interpolation switch control signal SetPolatorType"1" as the timing of switching the top of each picture, the switch 802 closes its terminal for a specified period of time so as to let a pixel interpolation type signal PolatorType be inputted from outside into the. switch 804 and the switch 805. Such pixel interpolation type signal PolatorType is a signal to be inputted from outside in order to select a type of pixel interpolation according to power processing load on the picture coding apparatus 800 to be measured with the amount of remaining data and the like in a transmission buffer in the picture coding apparatus 800 not illustrated in the diagram as a guide, or to the decoding capabilities that a picture decoding apparatus is assumed to have. After the lapse of said specified period of time, the switch 802 opens its terminal to turn to OFF, and turns to ON when the pixel interpolation switch control signal SetPolatorType"1" is inputted again. Furthermore, once a pixel interpolation type signal PolatorType is inputted from outside via the switch 802, the switch 804 and the' switch 805 remain to be connected to a connection terminal indicated by the value of such Pixel interpolation type signal PolatorType until another pixel interpolation type signal PolatorType of a different value is inputted.

For instance, if the value of a pixel interpolation type signal PolatorType inputted in a short period of time during which the switch 802 is conducting at the top of a certain picture is "1", the switch 804 and the switch 805 connect to the respective terminals "1" and remain to be in that sate. Subsequently, if the value of a pixel interpolation type signal PolatorType inputted in a short period of time during which the switch 802 is conducting at the top of the next picture is "0", the switch 804 and the switch 805 connect to the respective terminals "2" and remain to be in that sate. Accordingly, switching between pixel interpolation methods are made only at the top of pictures, which consequently prevents switching between pixel interpolation methods from being made while a picture is being coded.

With a plurality of pixel interpolating units with different prediction accuracy available, pixel interpolation utilizing switch judgment is carried out by selectively applying a filter on a per picture basis, from among a plurality of pixel interpolation methods, which provides optimal prediction efficiency within the limit of the processing amount. As another pixel interpolation employing switch judgment, when processing power of a picture coding apparatus becomes deficient while each picture is being coded, switching may be made at the next picture to a pixel interpolation method which requires a small amount of processing. Consequently, another pixel interpolating unit is selected according to a pixel interpolation type signal PolatorType.

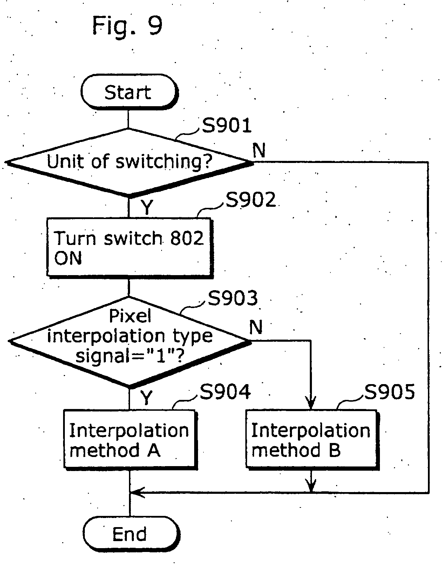

Fig.9 is a flowchart showing the procedure of selecting an interpolation method in the picture coding apparatus 800. More specifically, the picture coding apparatus 800 performs a selection process illustrated in the flowchart of Fig. 9 by connecting the switch 802 according to the value of a pixel interpolation switch control signal SetPolatorType and making a switch between the switch 804 and the switch 805 according to the value of a pixel interpolation type signal PolatorType to be inputted from outside while the switch 802 is connected. The picture coding apparatus 800 detects a picture header and the like indicating the top of each picture from the picture signal Img (S901), and outputs, through the pixel interpolation switch position judging unit 801, a pixel interpolation switch control signal "1", for example, so as to turn the switch 802 ON (S902). The picture coding apparatus 800 judges whether or not the value of the pixel interpolation type signal inputted while the switch is ON is "1" (S903), and connects the switch 804 and the switch 805 to the respective terminals "1", when the value is "1", so as to select the interpolation method A to be conducted by the pixel interpolating unit A403 (S904). If the value of the pixel interpolation type signal PolatorType is not "1", the switch 804 and the switch 805 are connected to the respective terminals "2", and the interpolation method B by the pixel interpolating unit B404 is selected (S905). The picture coding apparatus 800 repeats the processing from the above steps S901 to S905 for each picture of the picture signal Img to be inputted.

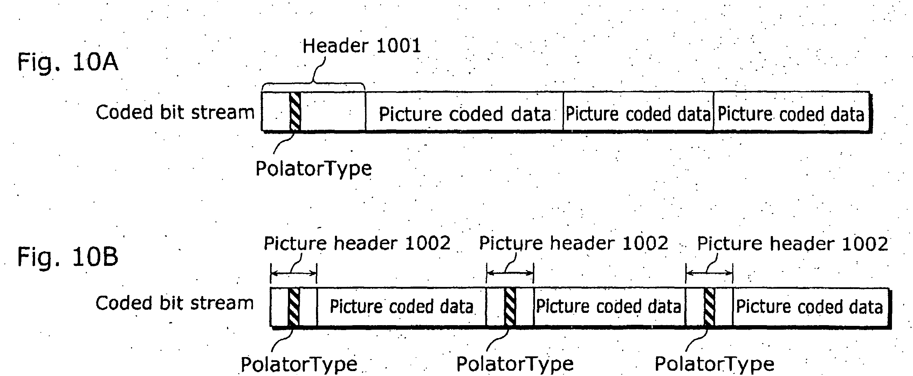

When a picture is employed as the unit of switching pixel interpolation types in the variable length coding unit 803, the picture coding apparatus 800 further records the value of a pixel interpolation type signal PolatorType on each picture of the coded signal Bitstream to be outputted by the picture coding apparatus 800, e.g., on each picture header of such coded signal Bitstream, and outputs it. Fig.10A is a diagram showing the stream structure of the coded signal Bitstream according to the present invention. Fig.10B is a diagram showing a coded signal Bitstream in the case where pixel interpolation methods are switched on a per picture basis. The coded signal according to the present invention is characterized by that a pixel interpolation type signal PolatorType is included in the coded signal Bitstream. Such stream structure enables a picture decoding apparatus that decodes the coded signal Bitstream of the present invention to use the same pixel interpolation method as used by a pixel interpolating unit employed for coding, by checking the pixel interpolation type signal.

In the coded signal Bitstream illustrated in Fig.10A, the value of a pixel interpolation type signal PolatorType indicating an interpolation method used for performing pixel interpolation for each picture is described in a header 1001 (e.g. diagonally shaded part) to be provided for the whole coded signal Bitstream. Meanwhile, in the coded signal Bitstream illustrated in Fig.10B, the value of a pixel interpolation type signal PolatorType indicating an interpolation method used for performing pixel interpolation for a picture is described in a picture header 1002 (e.g. diagonally shaded part) to be provided for each picture. As shown above, by storing a pixel interpolation type signal PolatorType in the header 1001 which is the head of the coded signal Bitstream or picture headers 1002 which are the heads of random access points, it becomes possible for the picture decoding apparatus to identify the pixel interpolation type of a picture before decoding such picture, by inputting a coded signal Bitstream from the header 1001 or an access point.

Note that although it is' explained here that the pixel interpolating units are switched on a per picture basis, the pixel interpolating units may be switched not only for each picture but also for each picture area smaller than a picture (any area made up of a combination of more than one pixel, e.g., slice/macroblock/block of MPEG, would be acceptable). When switching is made on a per slice basis, for example, the values of pixel interpolation type signals PolatorType corresponding to each slice may be described in the header to be provided for the whole coded signal Bitstream, or may be collectively described in picture headers on a per picture basis. Also, the' value of a pixel interpolation type signal of each slice may be described in the slice header of each slice. Moreover, when switching of pixel interpolation methods is made on a per macroblock or block basis, the value of a pixel interpolation type signal of each macroblock or block may be collectively described in the slice header of each slice.

As explained above, by setting the values of pixel interpolation type signals to be inputted to the picture coding apparatus of the present invention so that a pixel interpolating unit appropriate to the processing power of the picture decoding apparatus can be selected, it becomes possible to generate a coded signal appropriate to the processing power of the picture decoding apparatus that reproduces a coded signal outputted by the picture coding apparatus according to the present invention. Moreover, it is possible to select a pixel interpolating unit in accordance with the processing power of the picture coding apparatus.

Note that existing picture coding methods include coding methods in which pixel interpolation methods for generating the pixel value corresponding to a position in a predictive picture signal are switched depending on such position in the predictive picture signal. Such coding methods, for instance, are one in which a pixel interpolation method for a half pixel position is selected when generating a pixel value corresponding to a half pixel position, and one in which a pixel interpolation method for a quarter pixel position is selected when generating a pixel value corresponding to a quarter pixel position. While these coding methods allow only either of such pixel interpolation methods to be selected for a target pixel position, the coding method according to the present invention is different in that a plurality of pixel interpolating units are available for each calculation of the pixel value corresponding to a single position in a predictive picture signal, and therefore a plurality of pixel interpolation methods are freely selected for calculating the pixel value corresponding to a single pixel position. Also, the picture coding method of the present invention may be combined with the above methods in which a plurality.of pixel interpolation methods are switched for various pixel positions. In this case, a plurality of pixel interpolating units for calculating each pixel value corresponding to various pixel positions, as well as a plurality of pixel interpolating units of different prediction accuracy for calculating the pixel value for a single pixel position are provided.

Note that although an explanation is given in the above-described embodiment for the picture coding apparatus equipped with two pixel interpolating units, there may be three or more pixel interpolating units. In such a case, one of three or more pixel interpolating units is selected and used, and a pixel interpolation type signal indicating the type of such used pixel interpolation unit is incorporated into a coded signal.

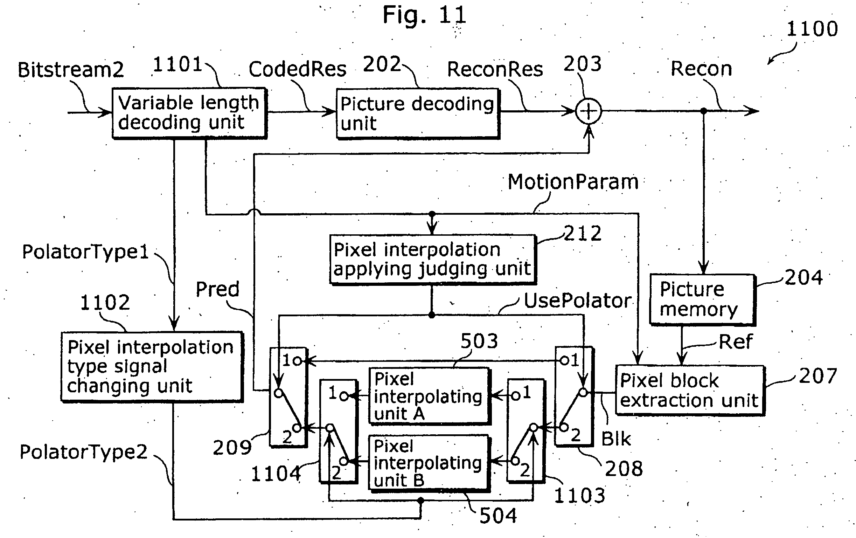

Fig.11 is a block diagram showing the configuration of another picture decoding apparatus 1100 according to the present embodiment. In Fig.11, the same numbers are assigned to the constituent elements which operate in the same manner and the same signals as those in the picture decoding apparatus 500 illustrated in Fig.5, and explanations thereof. are omitted. The picture decoding apparatus 1100 is comprised of the picture decoding unit 202, the adder 203, the picture memory 204, the pixel block extraction unit 207, the switch 208, the switch 209, the pixel interpolation applying judging unit 212, the pixel interpolating unit A503, the pixel interpolating unit B504, a variable length decoding unit 1101, a pixel interpolation type changing unit 1102, a switch 1103, and a switch 1104. The coded signal Bitstream2 outputted by the picture coding apparatus 800 illustrated in Fig.8is inputted to the picture decoding apparatus 1100. In other words, pixel interpolation type signals PolatorType1 are described in the coded signal Bitstream2 to be inputted to the picture decoding apparatus 1100. The picture decoding apparatus 1100 is characterized by that, when the picture decoding apparatus 1100 is not equipped with a pixel interpolating unit indicated by a pixel interpolation type signal PolatorType1 in the coded signal Bitstream2, it uses instead either of the pixel interpolating units that the picture decoding apparatus 1100 has.

The picture decoding apparatus 1100 is equipped only with two types of pixel interpolating units indicated by the values "1" and "2" of a pixel interpolation type signal PolatorType1, i.e., the pixel interpolating unit A503 (the number of filter taps N=4) and the pixel interpolating unit B504 (the number of filter taps N=8). In the picture decoding apparatus 1100, the variable length decoding unit 1101 performs variable length decoding for the coded signal Bitstream2, and demultiplexes it into the coded differential picture signals CodedRes, the motion parameter signals MotionParam, and the pixel interpolation type signals PolatorType1. The pixel interpolation type changing unit 1102 holds inside it an interpolation type table which is prepared in advance and which indicates types of the pixel interpolating units which would be specified by the pixel interpolation type signals PolatorType1, parameters indicating the characteristics of each of such pixel interpolating units, and whether the pixel interpolating units are implemented or not. On the basis of such interpolation type table, the pixel interpolation type changing unit 1102 judges whether a pixel interpolating unit indicated by the value of a pixel interpolation type signal PolatorType1 is implemented or not in the picture decoding apparatus 1100.

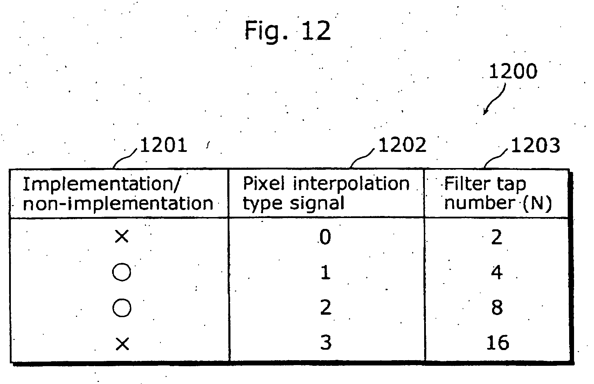

Fig.12 is a diagram showing an example of an interpolation type table 1200 which the pixel interpolation type changing unit 1102 illustrated in Fig.11, holds. As shown in the diagram, the interpolation type table 1200 describes implementation /non-implementation 1201 of each pixel interpolating unit indicated by the values of the pixel interpolation type signals PolatorType1, values of the pixel interpolation type signals PolatorType1 1202, and filter tap number (N) 1203 indicating the characteristics of each pixel interpolating unit indicated by the value of a pixel interpolation type signal PolatorType1. When the value of a pixel interpolation type signal PolatorType1 is a value, "3" for example, indicating a pixel interpolating unit C (filter tap number N=16) which is not implemented in the picture decoding apparatus 1100, the pixel interpolation type changing unit 1102 selects, from among the pixel interpolating units which are implemented, the pixel interpolating unit B504 (filter tap number N=8) whose filter tap number (N) 1203 described in the interpolation type table 1200 is closest to that of the pixel interpolating unit C indicated by such pixel interpolation type signal PolatorType1, converts the value of the pixel interpolation type signal PolatorType1 into the value "2", for example, and outputs it as a pixel interpolation type signal PolatorType2. While it cannot be denied that such 'conversion process will cause the degradation in image quality because of the fact that pixel interpolating units different from pixel interpolating units used at the time of coding are used in the picture decoding apparatus 1100, it is possible to perform decoding for the coded differential picture signals CodedRes and the motion parameter signals MotionParam, allowing a preview of a decoded video. When "1" is inputted as the pixel interpolation type signal PolatorType2-, the switch 1103 and the switch 1104 switch to the terminals "1", and the pixel. interpolating unit A503 is used for the decoded Picture signal Recon. When "2" is inputted as the pixel interpolation type signal PolatorType2, the switch 1103 and the switch 1104 switch to the terminals "2", and the pixel. interpolating unit B504 is used for the decoded Picture signal Recon.

As explained above, according to the picture decoding apparatus 1100 of the present invention, the effect of being able to decode an input coded signal Bitstream without any problem can be achieved, even when the coded signal Bitstream which includes a pixel interpolation type signal PolatorType2 indicating a pixel interpolating unit not implemented in the picture decoding apparatus 1100 is inputted. Meanwhile, when the picture decoding apparatus 1100 has only one pixel interpolating unit, an input coded signal Bitstream can be decoded by forcedly using such pixel interpolating unit. Furthermore, although the picture decoding apparatus 1100 according to the present embodiment includes two pixel interpolating units, an equivalent processing can be performed even if there are three or more pixel interpolating units. Note that when pixel interpolation types are switched on a picture basis or for each picture area smaller than pictures, the picture decoding apparatus 1100 makes a switch of pixel interpolating units at the point in time when a pixel interpolation type is switched, as presented in the first embodiment. Also note that although the characteristics of a plurality of pixel interpolating units are indicated here by the number of fitter taps, it does not necessarily have to be filter tap numbers, and therefore other parameters can substitute them. Moreover, when it is obvious. that the picture decoding apparatus 1100 has all pixel interpolation filters which are possible to be employed by the picture coding apparatus, the pixel interpolating type changing unit 1102 of the picture decoding apparatus 1100 can be omitted. In such a case, a pixel interpolation type signal PolatorType1 will be used as it is as a pixel interpolation type signal PolatorType2.

(Second Embodiment)

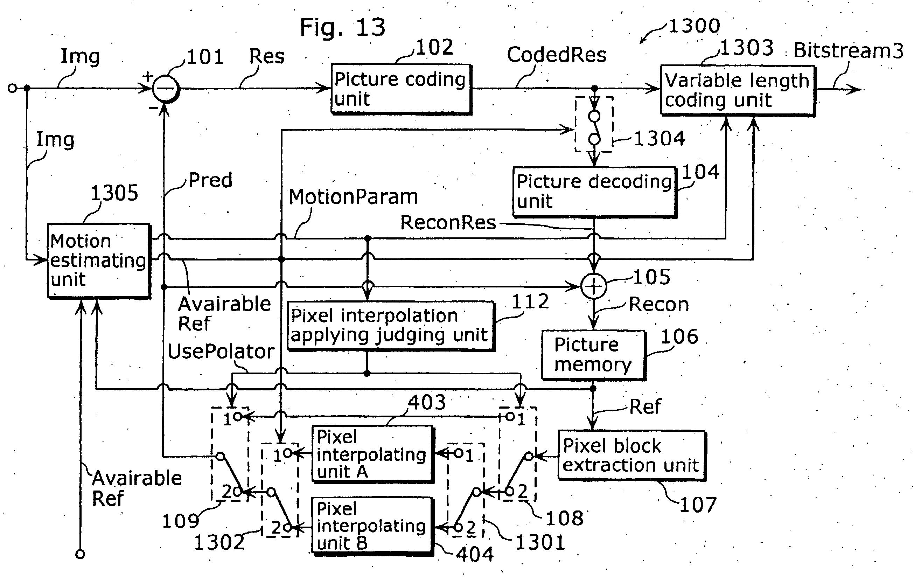

Fig.13 is a block diagram showing the configuration of a picture coding apparatus 1300 according to the second embodiment of the present invention. Note that the same reference numbers are assigned to the constituent elements which operate in the same manner and. the same signals as those in the picture coding apparatus 100, the picture coding apparatus 400, and the picture coding apparatus 800 illustrated in Fig.2, Fig.4 and Fig.8, and explanations thereof are omitted. The picture coding apparatus 1300 is a picture coding apparatus that uses a pixel interpolating unit which involves a smaller amount of processing in pixel interpolation when a picture to be' coded is a picture not to be referred to by other pictures, while using a pixel interpolating unit which offers high prediction efficiency but which involves a larger amount of processing in pixel interpolation when a picture to be coded is a picture not to be referred to by other pictures, and is comprised of the differential calculator 101, the picture coding unit 102, the picture decoding unit 104, the adder 105, the picture memory 106, the pixel block extraction unit 107, the switch 108, the switch 109, the pixel interpolation applying judging unit 112, a switch 1301, a switch 1302, a variable length coding unit 1303, a switch 1304, and a motion estimating unit 1305. To the motion estimating unit 1305, reference instruction signals AvairableRef indicating whether or not pictures to be coded will be used later as reference pictures are inputted from outside. A reference instruction signal AvairableRef, which is a signal to be inputted from outside according to a setting inputted by an operator of the picture coding apparatus 1300 using such an input unit as a keyboard not illustrated in the diagram, indicates that a picture to be coded is not to be used as a reference picture when its value is "0", while indicating that the picture to be coded is to be used later as a reference picture when its value is "1".

In response to this, when the value of a reference instruction signal AvairableRef is "0", i.e., when a picture to be coded will not be referred to by other pictures, the switch 1301 and the switch 1302 connect to the respective terminals "1", and select the pixel interpolating unit A403 which involves a smaller amount of processing. 'Meanwhile, when the value of a reference instruction signal AvairableRef is "1", i.e., when a pic.ture to be coded will be referred to by other pictures later, the switch 1301 and the switch 1302 connect to the respective terminals "2", and select the pixel interpolating unit B404 which offers high prediction efficiency but which involves a larger amount of processing. Furthermore, the switch 1304 turns to OFF when the value of a reference instruction signal AvairableRef is "0", and the decoded differential picture signal ReconRes of the above picture will not be stored in the picture memory 106. When the value of a reference instruction signal AvairableRef is "1", on the other hand, the switch 1304 turns to ON, and the decoded differential picture signal ReconRes of the above picture will be stored in the picture memory 106. The variable length coding unit 1303 records and outputs the value of a reference instruction signal AvairableRef in each picture of a coded signal Bitstream3, e.g., in each picture header of the coded signal Bitstream3, which is an output of the picture coding apparatus 1300 and which has the stream structure illustrated in Fig.10.

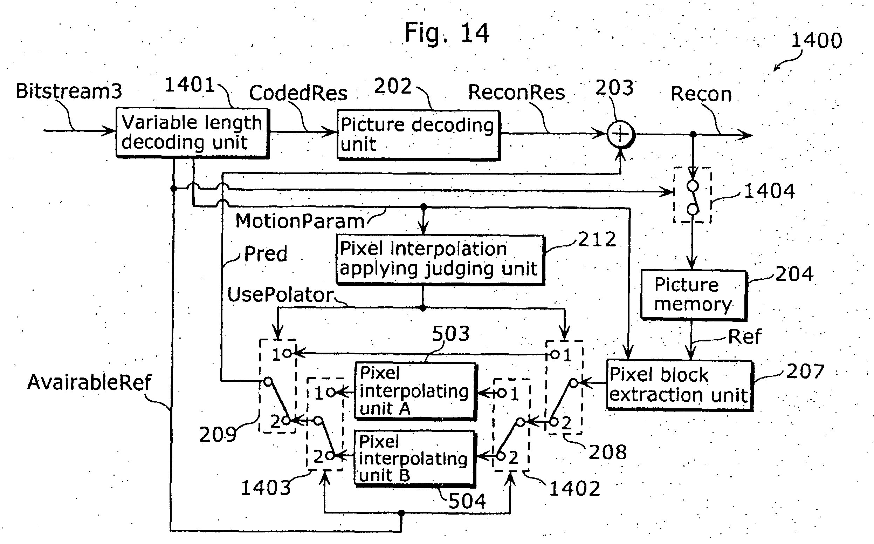

Fig.14 is a block diagram showing the configuration of a picture decoding apparatus 1400 for decoding the coded signal Bitstream3, which is an output of the picture coding apparatus 1300 illustrated in Fig. 13. In the diagram, since explanations are already given for the same constituent elements which operate in the same manner and the same signals as those of the picture decoding apparatus 200 and the picture decoding apparatus 500 and the picture decoding apparatus 1100 illustrated in Fig.3, Fig.5 and Fig.11, the same reference numbers are assigned to such constituent elements, and explanations thereof are omitted. The picture decoding apparatus 1400, which is a picture decoding apparatus that decodes the coded signal Bitstream3 including the above-described reference instruction signals AvairableRef, is comprised of the picture decoding unit 202, the adder 203, the picture memory 204, the pixel block extraction unit 207, the switch 208, the switch 209, the pixel interpolation applying judging unit 212, a variable length decoding unit 1401, a switch 1402, a switch 1403 and a switch 1404. The variable length decoding unit 1401 performs variable length decoding for the inputted coded signal Bitstream3, and demultiplexes it into the coded. differential picture signals CodedRes, the motion parameter signals MotionParam, and the reference instruction signals AvairableRef. The demultiplexed reference instruction signals AvairableRef are inputted to the switch 1402, the switch 1403 and the switch 1404. The switch 1404 turns to OFF when the value of a reference instruction signal AvairableRef is "0", i.e., when the decoded image signal Recon of the picture will not be used as a reference picture. Therefore, the decoded image signal Recon of the picture will not be stored in the memory 204. On the other hand, when the value of a reference instruction signal AvairableRef is "1", i.e., when the decoded image signal Recon of the picture will be referred to as a reference picture, the switch 1404 turns to ON. Accordingly, the decoded image signal Recon of the picture will be stored in the image memory 204. Meanwhile, when the value of a reference instruction signal AvairableRef is "0", i.e., when the decoded image signal Recon of the picture will not be used to as a reference picture, the switch 1402 and the switch 1403 connect to the respective terminals "1", and select the pixel interpolating unit A503 which involves a smaller amount of processing. When the value of a reference instruction signal AvairableRef is "1", on the other hand, the switch 1402 and the switch 1403 connect to the respective terminals "2", and select the pixel interpolating unit B504 which involves a larger amount of processing but which offers high prediction efficiency.

As described above, in the picture coding apparatus 1300 and the picture decoding apparatus 1400 according to the present embodiment, when a pixel interpolation method which involves a small amount of processing is used for a picture to be coded which will be referred to by other pictures, the influence of image quality degradation due to low prediction accuracy of such pixel interpolation method capable of handling small processing amount will propagate to other pictures, but since a pixel interpolation method which involves a small amount of processing. is used only for a picture to be coded which will not to be referred to by other pictures, it is possible to reduce the power processing load in pixel interpolation in the image coding apparatus 1300 and the image decoding apparatus 1400, without affecting other pictures by the degradation in the image quality of a picture to be coded stemming from low prediction accuracy. Therefore, the picture coding apparatus 1300 and the picture decoding apparatus 1400 are capable of minimize the degradation in predication accuracy and reducing the power processing load generated in picture coding processing.

Note that although there is the switch 1404, and the decoded image signal Recon of a picture riot to be referred to by other pictures is not stored in the picture memory 204 in the image decoding apparatus 1400 according to the present invention, the above-explained other picture decoding apparatuses according to the present invention may also be equipped with the switch 1404.

Moreover, in the aforementioned first embodiment and the second. embodiment, although the pixel interpolating unit A403 and the. pixel interpolating unit. B404 are switched by switches and used, the present invention is . not limited to this and therefore, the pixel interpolating unit A403 and the pixel interpotating unit B404 may be substituted with a single pixel interpolating unit that operates in a plurality of operation modes. Such pixel interpolating unit is a single pixel filter for performing operations in accordance with a plurality of operation methods or a plurality of operation equations, depending on target prediction accuracy or power processing toad to be obtained, for example, and a single operation mode (operational method or a operational expression) is determined according to parameters to be provided from outside.

(Third Embodiment)

If a program for realizing the structure of the picture coding method or the picture decoding method as shown in each of the aforementioned embodiments is recorded on a recording medium such as a flexible disk, it becomes possible to perform the processing presented in each of the aforementioned embodiments easily in an independent computer system.

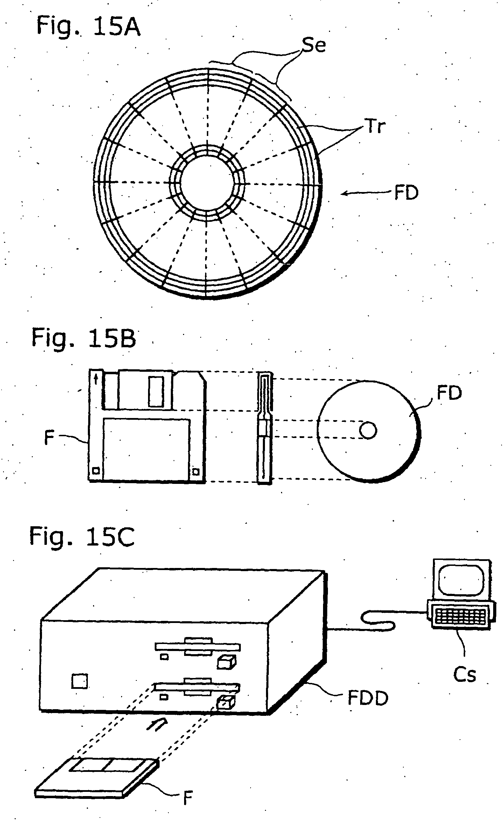

Fig.15 is a diagram explaining the case where the processing is performed in a computer system using a flexible disk which stores the picture coding method or the picture decoding method of the above-described first to third embodiments.

Fig.15B shows an external view of the flexible disk viewed from the front, a schematic cross-sectional view and the flexible disk, while Fig. 15A illustrates an example physical format of the flexible disk 1201 as a recording medium itself. A flexible disk FD is contained in a case F, a plurality of tracks Tr are formed concentrically on the surface of the disk in the radius direction from the periphery, and each track is divided into 16 sectors Se in the angular direction. Therefore, in the flexible disk storing the above-mentioned program, the picture coding method as such program is recorded in an area allocated for it on the flexible disk FD.

Fig.15C shows the structure for recording and reading out the program on and from the flexible disk FD. When the program is recorded on the flexible disk FD, the computer system Cs writes the picture coding method or the picture decoding method as a program via a flexible disk drive FDD. When the picture coding method is constructed in the computer system by the program on the flexible disk, the program is read out from the flexible disk via the flexible disk drive and transferred to the computer system.

The above explanation is made on the assumption that a recording medium is a flexible disk, but the same processing can also be performed using an optical disc. In addition, the recording medium is not limited to a flexible disk and an optical disc, and any other medium such as an IC card and a ROM cassette capable of recording a program can be used.

Following is the explanation of the applications of the picture coding method and the picture decoding method as shown in the first embodiment, and the system using them

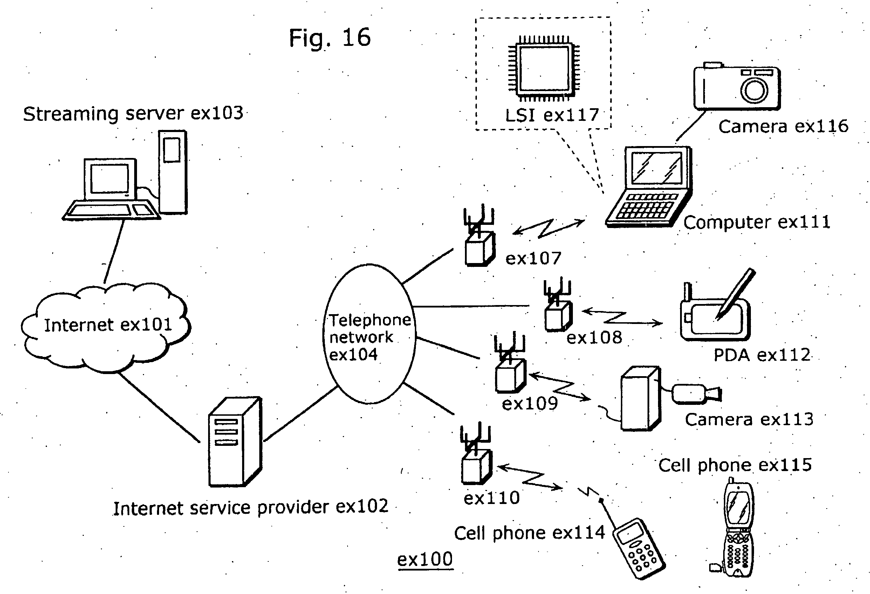

Figs.16 to 19 are diagrams explaining a device for performing coding processing or decoding processing shown in the aforementioned embodiments as well as a system utilizing such device.

Fig. 16 is a block diagram showing the overall configuration of a content supply system ex100 for realizing a content distribution service. The area for providing communication service is divided into cells of desired size, and base stations ex107~ex110 which are fixed wireless stations are placed in respective cells. In this content supply system ex100, a computer ex111, a PDA (Personal Digital Assistant) ex112, a camera ex113, and a cell phone ex114 are connected to the Internet eX101 via an Internet service provider ex102 and a telephone network ex104. However, the content supply system ex100 is not limited to the configuration as shown in Fig. 16, and may be connected to a combination of any of them. Also, each device may be connected directly to the telephone network ex104, not through the base stations ex107~ex110 which are fixed wireless stations.

The camera ex113 is a device such as a digital video camera capable of shooting moving pictures. The cell phone may be a cell phone of a PDC (Personal Digital Communication) system, a CDMA (Code Division Multiple Access) system, a W-CDMA (Wideband-Code Division Multiple Access) system or a GSM (Global System for Mobile Communications) system, a PHS (Personal Handyphone system) or the like.

A streaming server ex103 is connected to the camera ex113 via the base station ex109 and the telephone network ex104, which enables live distribution or the like using the camera ex113 based on coded data transmitted from the user using the camera ex113. Either the camera ex113 or the server and the like for carrying out data transmission may code the shot data. Also, moving picture data shot by a camera ex116 may be transmitted to the streaming server ex103 via the computer ex111. The camera ex116 is a device such as a digital camera capable of shooting still pictures and moving pictures. In this case, either the camera ex116 or the computer ex111 may code the moving picture data. An LSI ex117 included in the computer ex111 and the camera ex116 performs coding processing. Note that software for coding and decoding pictures may be integrated into a certain type of storage medium (such as a CD-ROM, a floppy disk and a hard disk) that is a recording medium readable by the computer ex111 or the like. Furthermore, a cell phone with a camera ex115 may transmit the moving picture data. This moving picture data is data coded by the LSI included in the cell phone ex115.

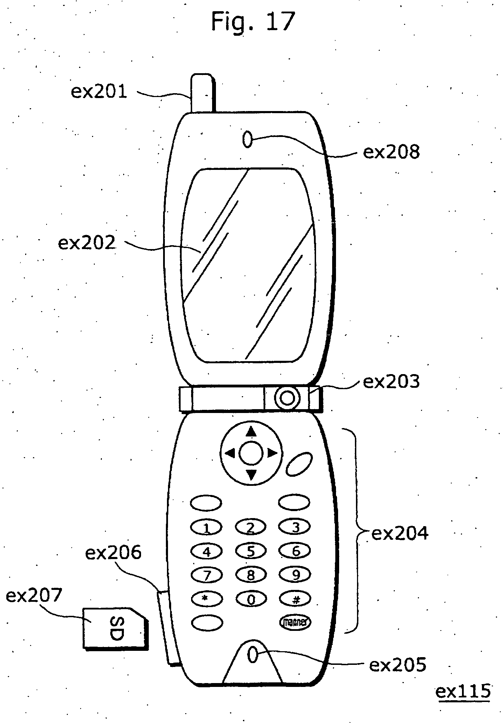

Fig.17 is a diagram showing an example of the cell phone ex115. The cell phone ex115 has an antenna ex201 for transmitting/receiving radio waves to and from the base station ex110 via radio waves, a camera unit ex203 such as a CCD camera capable of shooting videos and still pictures, a display unit ex202 such as a liquid crystal display for displaying the data obtained by decoding videos and the like shot by the camera unit ex203 and decoding videos and the like received by the antenna ex201, a main body including a set of operation keys ex204, a voice output unit ex208 such as a speaker for outputting voices, a voice input unit ex205 such as a microphone for inputting voices, a recording medium ex207 for storing coded or decoded data such as data of moving or still pictures shot by the camera, data of received e-mails and moving picture data or still picture data, and a slot unit ex206 for enabling the recording medium ex207 to be attached to the cell phone ex115. The recording medium ex207 stores in itself a flash memory element, a kind of EEPROM (Electrically Erasable and Programmable Read Only Memory) that is an electrically erasable and rewritable nonvolatile memory, in a plastic case such as a SD card.

In the content supply system ex100, content (such as a music live video) shot by the user using the camera ex113, the camera ex116 or the like is coded' in the same manner as the above-described embodiments and transmitted to the streaming server ex103, and the streaming server ex103 makes stream distribution of the content data to clients at their request. The clients include the computer ex111, the PDA ex112, the camera ex113, the cell phone ex114 and so on capable of decoding the above-mentioned coded data. The content supply system ex100 with the above structure is a system in which the clients can receive and reproduce the coded data, and further can receive, decode and reproduce the data in real time so as to realize personal broadcasting.

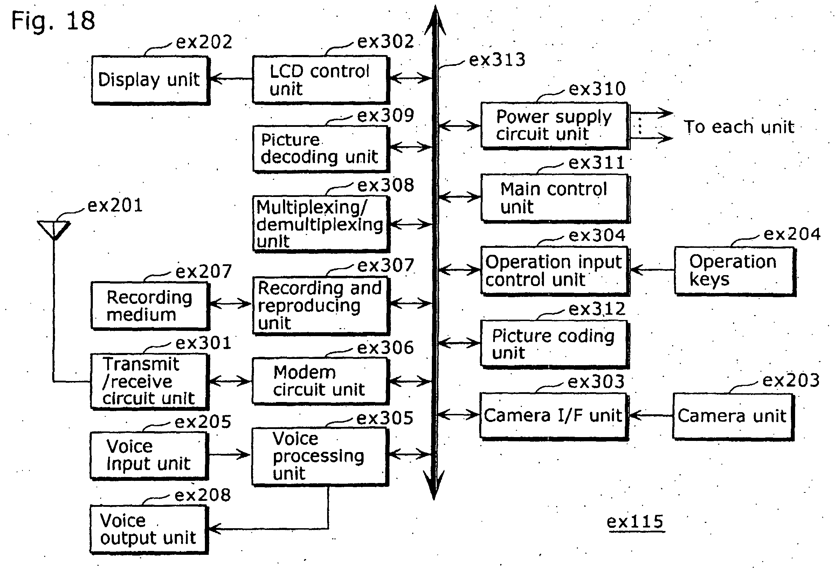

Next, the cell phone ex115 will be explained with reference to Fig.18. Fig.18 is a block diagram showing the configuration of the cell phone ex115. In the cell phone ex115, a main control unit ex311 for overall controlling the display unit ex202 and each unit of the main body ex204 is configured in a manner in which a power supply circuit unit ex310, an operation input control unit ex304, a picture coding unit ex312, a camera interface unit ex303, an LCD (Liquid Crystal Display) control unit ex302, a picture decoding unit ex309, a multiplexing/demultiplexing unit ex308, a recording and reproducing unit ex307, a modem circuit unit ex306 and a voice processing unit ex305 are interconnected via a synchronous bus ex313. When a call-end key or a power key is turned ON by a user's operation, the power supply circuit unit ex310 supplies to each unit with power from a battery pack so as to activate the digital cell phone with a camera ex115 for making it into a ready state. In the cell phone ex115, the voice processing unit ex305 converts voice signals received by the voice input unit ex205 in conversation mode into digital voice data under the control of the main control unit ex311 comprised of a CPU, a ROM, a RAM and others, the modem circuit unit ex306 performs spread spectrum processing for it, and a transmit/receive circuit unit ex301 performs digital-to-analog conversion processing and frequency transform processing for the data, so as to transmit it via the antenna ex201. Also, in the cell phone ex115, the transmit/receive circuit unit ex301 amplifies a received signal received by the antenna ex201 in conversation mode and performs frequency transform processing and analog-to-digital conversion processing for the data, the modem circuit unit ex306 performs inverse spread spectrum processing for the data, and the voice processing unit ex305 converts it into analog voice data, so as to output it via the voice output unit ex208.

Furthermore, when transmitting an e-mail in data communication mode, the text data of the e-mail inputted by operating the operation keys ex204 on the main body is sent out to the main control unit ex311 via the operation input control unit ex304. In the main control unit ex311, after the modem circuit unit ex306 performs spread spectrum processing for the text data and the transmit/receive circuit unit ex301 performs digital-to-analog conversion processing and frequency transform processing. for it, the data is transmitted to the base station ex110 via the antenna ex201.

When the picture data is transmitted in data communication mode, the picture data shot by the camera unit ex203 is supplied to the picture coding unit ex312 via the camera interface unit ex303. When the picture data is not transmitted, it is also possible to display the picture data shot by the camera unit ex203 directly on the display unit 202 via the camera interface unit ex303 and the LCD control unit ex302.

The picture coding unit ex312 compresses and codes the picture data supplied from the camera unit ex203 by the coding method presented in the above-mentioned embodiments so as to convert it into coded picture data, and sends it out to the multiplexing/demultiplexing unit ex308. At this time, the cell phone ex115 sends out the voices received by the voice input unit ex205 while the shooting by the camera unit ex203 is taking place, to the multiplexing/demultiplexing unit ex308 as digital voice data via the voice processing unit ex305.

The multiplexing/demultiplexing unit ex308 multiplexes the coded picture data supplied from the picture coding unit ex312 and the voice data supplied from the voice processing unit ex305 by a predetermined method, the modem circuit unit ex306 performs spread spectrum processing for the resulting multiplexed data, and the transmit/receive circuit unit ex301 performs digital-to-analog conversion processing and frequency transform processing so as to transmit the processed data via the antenna ex201.

When receiving data of a moving picture file which is linked to a Web page or the like in data communication mode, the modem circuit unit ex306 performs inverse spread spectrum processing for the data received from the base station ex110 via the antenna ex201, and sends out the resulting multiplexed data to the multiplexing/demultiplexing unit ex308.

In order to decode the multiplexed data received via the antenna ex201, the multiplexing/demultiplexing unit ex308 separates the multiplexed data into coded picture data and voice data, and supplies the coded picture data to the picture decoding unit ex309 and the voice data to the voice processing unit ex305 via the synchronous bus ex313.

Next, the picture decoding unit ex309 decodes the coded picture data by the decoding method corresponding to the coding method as shown in the above-mentioned embodiments to generate reproduced moving picture data, and supplies 'this data to the display unit ex202 via the LCD control unit ex302, and thus moving picture data included in a moving picture file linked to a Web page, for instance, is displayed. At the same time, the voice processing unit ex305 converts the voice data into analog voice data, and supplies this data to the voice output unit ex208, and thus voice data included in a moving picture file linked to a Web page, for instance, is reproduced.

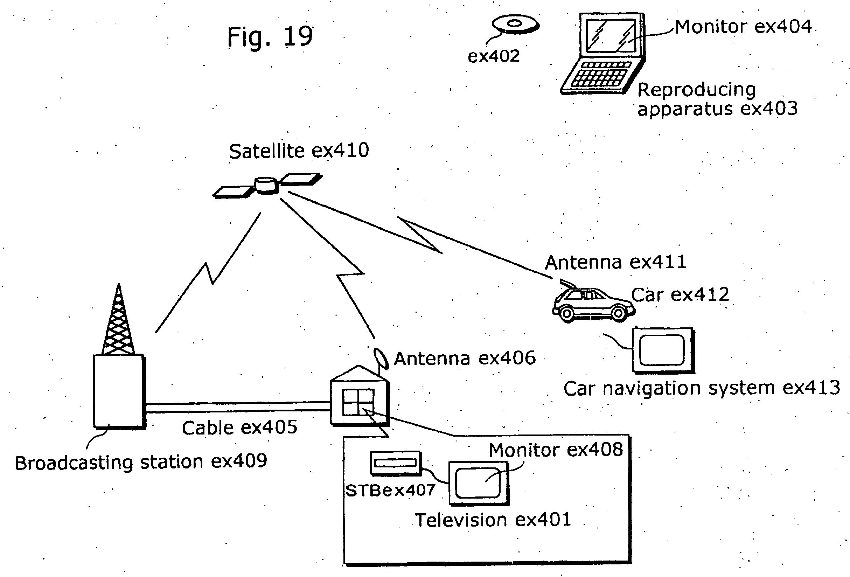

Note that the aforementioned system is not an exclusive example and therefore that at least either the coding method or the decoding method of the above embodiments can be incorporated into a digital broadcasting system as shown in Fig.19, against the backdrop that satellite/terrestrial digital broadcasting has been a recent topic of conversation. To be more specific, at a broadcasting station ex409, a coded bit stream of video information is transmitted to a satellite ex410 for communications, broadcasting or the like by radio waves. Upon receipt of it, the broadcast satellite ex410 transmits radio waves for broadcasting, an antenna ex406 of a house equipped with satellite broadcasting reception facilities receives the radio waves, and an apparatus such as a television ex401 and a set top box ex407 decodes the bit stream and reproduce the decoded data. The decoding method as shown in the above-mentioned embodiments can be implemented in the reproducing apparatus ex403 for reading off and decoding the codedbit stream recorded on a storage medium ex402 that is a recording medium. In this case, a reproduced video signal is displayed on a monitor ex404. It is also conceived to implement the picture decoding apparatus in the set top box ex407 connected to a cable ex405 for cable television or the antenna ex406 for satellite/ground-based broadcasting so as to reproduce it on a television monitor ex408. In this case, the picture coding apparatus may be incorporated into the television, not in the set top box. Or, a car ex412 having an antenna ex411 can receive a signal from the satellite ex410, the base station ex107 or the like for reproducing a moving picture on a display device such as a car navigation system ex413.

As the configuration of the car navigation system ex413, the configuration without the camera unit ex203 and the camera interface unit ex303, out of the configuration shown in Fig.18, is conceivable. The same goes for the computer ex111, the television ex401 and others. Concerning the terminals such as the cell phone ex114, a transmitting/receiving terminal having both a coder and a decoder, as well as a transmitting terminal only with a coder and a receiving terminal only with a decoder are possible as forms of implementation.

As stated above, by implementing the coding method and the decoding method described in this specification, it is possible to embody the present invention as any one of the apparatuses and the system presented in the aforementioned embodiments.

## Industrial Applicability

As described above, the picture coding apparatus and the picture decoding apparatus according to the present invention are suited to be used as a picture coding apparatus and a picture decoding apparatus incorporated into a cell phone that transmits pictures, as well as a picture coding apparatus and a picture decoding apparatus equipped in a car navigation system. Furthermore, the present invention is suited for use as a program for carrying out the picture coding apparatus and the picture decoding apparatus of the present invention and as a recording medium that stores them. Also, the present invention is suitable as a recording medium that stores.coded signals generated by the picture coding apparatus of the present invention.

## Claims

1. A picture coding method that uses pixel interpolation for generating a predictive picture comprising:

   a selecting step for selecting one pixel interpolation method from a plurality of pixel interpolation methods; and
   a pixel value generating step for generating a pixel value corresponding to a target pixel position using the selected pixel interpolation method.

2. A picture coding method for performing pixel interpolation for a decoded picture and generating a predictive picture comprising:

   a decoding step for decoding an input coded signal;
   a storing step for storing the decoded picture decoded in the decoding step;
   a selecting step for selecting a pixel interpolation method involving a light power processing load from a plurality of pixel interpolation methods, when the decoded picture is a picture not to be referred to by other pictures; and
   a predictive picture generating step for generating the predictive picture using the selected pixel interpolation method.

3. A picture coding method for performing pixel interpolation for a decoded picture and generating a predictive picture comprising:

   a decoding step for decoding an input coded signal;
   a storing step for storing the decoded picture decoded in the decoding step;
   a selecting step for selecting a pixel interpolation method involving a light power processing load from a plurality of pixel interpolation methods, when the decoded picture is a B picture which refers to a plurality of pictures; and
   a predictive picture generating step for generating the predictive picture using the selected pixel interpolation method.

4. A picture coding method for performing pixel interpolation for a decoded picture and generating a predictive picture comprising:

a decoding step for decoding an input coded signal;
a storing step for storing the decoded picture decoded in the decoding step;
a selecting step for selecting a pixel interpolation method involving a lighter power processing load from a plurality of pixel interpolation methods than in a case of a P picture which refers to one picture, when the decoded picture is a B picture which refers to a plurality of pictures; and
a predictive picture generating step for generating, the predictive picture using the selected pixel interpolation method.

5. The picture coding method according to Claim2,
    wherein the plurality of pixel interpolation methods are pixel interpolation methods for calculating a pixel value corresponding to a target pixel position as an average of pixel values of decoded pixels located on both sides of the target pixel position, and use a different number of pikel values for calculating the average.

6. The picture coding method according to Claim1,
    wherein the plurality of pixel interpolation methods provide the predictive picture with different accuracies.

7. The picture coding method according to Claim1,
    wherein said one pixel interpolation method is selected in the selecting step for each input picture.

8. The picture coding method according to Claim1,
    wherein said one pixel interpolation method is selected in the selecting step for each slice of an input picture.

9. The picture coding' method according to Claim1 further comprising a coded signal generating step for generating a coded signal including information specifying the pixel interpolation method used for generating pixel values of the predictive picture.

10. The picture coding method according to Claim 9,
    wherein the information specifying the pixel interpolation method is written in header information corresponding to each picture of the coded signal in the coded signal generating step.

11. The picture coding method according to Claim9,
    wherein the information specifying the pixel interpolation method is written in slice information corresponding to each slice of the coded signal in the coded signal generating step.

12. A picture decoding method for performing pixel interpolation for a decoded picture and generating a predictive picture comprising:

    a selecting step for selecting a pixel interpolation method invoking a light power processing load from a plurality of pixel. interpolation methods, when the decoded picture to be obtained as a .result of decoding an input coded signal is a picture not to be referred to by another decoded picture to be obtained as a result of decoding the coded signal; and
    a predictive picture generating step for generating the predictive picture using the selected pixel interpolation method.

13. A picture decoding method for performing pixel interpolation for a decoded picture and generating a predictive picture comprising:

    a selecting step for selecting a pixel interpolation method involving a light power processing load from a plurality of pixel interpolation methods, when the decoded picture to be obtained as a result of decoding an input coded signal is a B picture which refers to a plurality of pictures; and
    a predictive picture generating step for g.enerating the predictive picture using the selected pixel interpolation method.

14. A picture decoding method for performing pixel interpolation for a decoded picture and generating a predictive picture comprising:

    a selecting step for selecting a pixel interpolation method involving a lighter power processing load from a plurality of pixel interpolation methods than in a case of a P picture which refers to one picture, when the decoded picture to be obtained as a result of decoding an input coded signal is a B picture which refers to a plurality of pictures; and

a predictive picture generating step for generating the' predictive picture using the selected pixel interpolation method.

15. A picture decoding method for performing pixel interpolation for a decoded picture serving as a predictive picture comprising:

an extracting step for extracting information specifying a pixel interpolation method from an input coded signal;

a decoded picture generating step for generating the decoded picture to be obtained as a result of decoding a part of the input coded signal; and

a pixel value generating step for generating pixel values of the predictive picture by performing pixel interpolation for the decoded picture using a pixel interpolation method specified by the information specifying the extracted pixel interpolation method.

16. The picture decoding method according to Claim15,

wherein the information specifying the pixel interpolation method is extracted in the extracting step from header information corresponding to each picture of the coded signal.

17. The picture decoding method according to Claim15,

wherein the information specifying the pixel interpolation method is extracted in the extracting step from slice information corresponding to each slice of the coded signal.

18. The picture decoding method according to Claim15 further comprising a judging step for making a judgment on whether the specified pixel interpolation method is available or not,

wherein the pixel values are generated in the pixel value generating step using as a substitute one of pixel interpolation methods which is available, when the specified pixel interpolation method is judged unavailable as a result of the judgment.

19. The picture decoding method according to Claim 18,

wherein a pixel interpolation method having a characteristic analogous to the specified pixel interpolation method is used in the pixel value generating step as a substitute out of the pixel interpolation methods which are available, when the specified pixel interpolation method is judged unavailable as a result of the judgment.

20. The picture decoding method according to Claim19,

wherein a pixel interpolation method involving power processing load equivalent to power processing load of the specified pixel interpolation method is used as a substitute in the pixel value generating step, when the specified pixel interpolation method is judged unavailable as a result of the judgment.

21. The picture decoding method according to Claim 19,

wherein a pixel interpolation method providing the predictive picture with a degree of accuracy equivalent to an accuracy of the specified pixet interpolation method is used as a substitute in the pixel value generating step, when the specified pixel interpolation. method is judged unavailable as a result of the judgment.

22. The picture decoding method according to Claim20,

wherein the plurality of pixel interpolation methods are pixel interpolation methods for calculating a pixel value corresponding to a target pixel position as an average of pixel values of decoded pixels located on both sides of the target pixel position, and use a different number of pixel values for calculating an average, and

a pixel interpolation method for calculating an average for the number of pixel values which is closest to the number of pixel values for which an average is calculated by the specified pixel interpolation method, is used as a substitute in the pixel value generating step.

23. A picture coding apparatus for generating a predictive picture using pixel interpolation and performing prediction coding for a moving picture comprising:

a storing unit operable to store a reference picture referred to by other pictures;

a plurality of selectable pixel interpolating units operable to read out the reference picture from the storing unit, and perform the pixel interpolation for a target pixel position when the target pixel position to be reached by moving the reference picture by an amount of motion is located between a pixel and a pixel of the reference picture,; and

a predictive picture generating step for generating the predictive picture using a selected pixel interpolation unit.

24. The picture coding apparatus according to Claim23 further comprising a 'variable length coding unit operable to generate a coded signal including information specifying the selected pixel interpolation unit.

25. A picture decoding apparatus for performing pixel interpolation for a decoded picture serving as a predictive picture comprising:

a variable length decoding unit operable to extract, from an input coded signal, a signal specifying a type of the pixel interpolation and a coded picture signal which is a differential based on the predictive picture;

a picture decoding unit operable to decode the extracted coded picture signal;

an adding unit operable to add to the predictive picture a result of the decoding performed for the coded picture signal which is the differential, and generate a decoded picture;

a plurality'of pixel interpolating units operable to perform pixel interpolation for the decoded picture in order to generate a pixel value corresponding to a target pixel position in the predictive picture, and output the interpolated decoded picture as the predictive picture; and

a switch for selecting one of the plurality of pixel interpolating units, according to the extracted signal specifying the type of the pixel interpolation,

wherein the adding unit adds the predictive picture for which the pixel value corresponding to the target pixel position is generated by the'selected pixel interpolating unit to the result of the decoding performed by the picture decoding unit, and generates the decoded picture.

26. A program for having a computer execute a picture coding method that uses pixel interpolation for generating a predictive picture, the program having the computer execute the following steps:

a selecting step for selecting one pixel interpolation method from a plurality of pixel interpolation methods at an instruction from outside; and

a pixel value generating step for generating a pixel value corresponding to a target pixel position using the selected pixel interpolation method.

27. A program for having a computer execute a picture decoding method for performing pixel interpolation for a decoded picture serving as a predictive picture, the program having the computer execute the following steps:

a selecting step for selecting pixel interpolation method involving a light power processing load from a plurality of pixel interpolation methods, when the decoded picture to be obtained as a result of decoding a part of an input coded signal is a picture not to be referred to by a decoded picture to be obtained as a result of decoding another part of the coded signal; and

a pixel value generating step for generating pixel values of the predictive picture using the selected pixel interpolation method.

28. A recording medium that stores coded data generated utilizing a picture coding method that uses pixel interpolation for generating a predictive picture,

wherein one pixel interpolation method is selected from a plurality of pixel interpolation methods at an instruction from outside,

a pixel value corresponding to a target pixel position is generated using the selected pixel interpolation method, and

information specifying the pixel interpolation method used for generating pixel values of the predictive picture is included in the coded data.

29. The recording medium according to Claim28,

wherein the information specifying the pixel interpolation method is written in header information corresponding to each picture of the coded signal.

30. The recording medium according to Claim28,

wherein the information specifying the pixel interpolation method is written in slice information corresponding to each slice of the coded signal.

## Fig. 1

Fig. 2

## Fig. 3

Fig. 3

200

Bitstream → 201 Variable length decoding unit → CodedRes → 202 Picture decoding unit → ReconRes → 203 ⊕ → Recon

MotionParam

212 Pixel interpolation applying judging unit

UsePolator

Pred

208

1

209

2

210 Pixel interpolating unit

Blk

207 Pixel block extraction unit

Ref

204 Picture memory

EP 1 432 249 A1

## Fig. 4

EP 1 432 249 A1

## Fig. 5

Fig. 5 block diagram labeled 500, showing:

Bitstream → **Variable length decoding unit** (505) → CodedRes → **Picture decoding unit** (202) → ReconRes → ⊕ (203) → Recon

MotionParam, Pred, UsePolator branch from the Variable length decoding unit to the **Pixel interpolation applying judging unit** (212)

**Picture memory** (204) → Ref → **Pixel block extraction unit** (207)

**Pixel interpolating unit A** (503)
**Pixel interpolating unit B** (504)

Switches labeled 209, 502, 501, 508, and 208

PicType

EP 1 432 249 A1

## Fig. 6A

Reference picture

I(i-2,j)    I(i-1,j)  I(i-0.5,j)  I(i,j)         I(i+1,j)

○  Pixel at integer position
✕  Pixel at decimal position

## Fig. 6B

Reference picture    I(i,j-1)

I(i,j-0.5)

I(i,j)

I(i,j+1)

i,j :Integer value
I(x,y) : Pixel value at coordinate (x,y)

Fig. 7A

Fig. 7B

Fig. 8

EP 1 432 249 A1

## Fig. 9

```
                    ┌──────────┐
                    │  Start   │
                    └────┬─────┘
                         │        S901
                ◇────────┴────────◇
                ◇ Unit of switching? ◇────N──────────────┐
                ◇─────────┬────────◇                      │
                          │ Y          S902               │
                    ┌─────┴──────┐                        │
                    │Turn switch 802                      │
                    │ON          │                        │
                    └─────┬──────┘                        │
                          │          S903                 │
                ◇─────────┴────────◇                      │
                ◇     Pixel        ◇                      │
                ◇ interpolation type ◇───N──────┐         │
                ◇  signal="1"?     ◇            │         │
                ◇─────────┬────────◇            │         │
                     Y │    S904              S905        │
              ┌────────┴──────┐       ┌────────┴──────┐   │
              │Interpolation  │       │Interpolation  │   │
              │method A       │       │method B       │   │
              └───────┬───────┘       └───────┬───────┘   │
                      │◄─────────────────────┴───────────┘
                ┌─────┴─────┐
                │   End     │
                └───────────┘
```

Fig. 10A

Header 1001

Coded bit stream | | | Picture coded data | Picture coded data | Picture coded data |

PolatorType

Fig. 10B

Picture header 1002      Picture header 1002      Picture header 1002

Coded bit stream | | Picture coded data | | Picture coded data | | Picture coded data |

PolatorType        PolatorType        PolatorType

EP 1 432 249 A1

Fig. 11

1100

Bitstream2   1101   CodedRes   202   ReconRes   203   Recon

| Variable length decoding unit | → | Picture decoding unit | → ⊕ → Recon

MotionParam

Pixel interpolation applying judging unit — 212

PolatorType1

1102   Pred

Pixel interpolation type signal changing unit

UsePolator

Picture memory — 204

Ref

503

PolatorType2

209

Pixel interpolating unit A

Pixel interpolating unit B

1104   1103

208   Blk

Pixel block extraction unit — 207

504

EP 1 432 249 A1

31

Fig. 12

1200

1201          1202          1203

| Implementation/<br>non-implementation | Pixel interpolation<br>type signal | Filter tap<br>number (N) |
|:---:|:---:|:---:|
| ✕ | 0 | 2 |
| ◯ | 1 | 4 |
| ◯ | 2 | 8 |
| ✕ | 3 | 16 |

**Fig. 13**

Img → + / − (101) → Res → Picture coding unit (102) → CodedRes → 1300 (1303) → Variable length coding unit → Bitstream3

1304

Picture decoding unit (104)

Img (1305) → Motion estimating unit

Pred

MotionParam

ReconRes

Avairable Ref

UsePolator

Pixel interpolation applying judging unit (112)

(105) → Recon

Picture memory (106)

403

Pixel interpolating unit A

Pixel block extraction unit (107)

Ref

Avairable Ref

109

1302

1301

108

Pixel interpolating unit B

404

EP 1 432 249 A1

# Fig. 14

Fig. 15A

Fig. 15B

Fig. 15C

Fig. 16

Streaming server ex103

LSI ex117

Camera ex116

Computer ex111

ex107

Internet ex101

Telephone network ex104

ex108

PDA ex112

ex109

Camera ex113

Internet service provider ex102

ex110

Cell phone ex115

Cell phone ex114

ex100

EP 1 432 249 A1

Fig. 17

ex201

ex208

ex202

ex203

ex204

ex206

ex207

SD

ex205

ex115

Fig. 18

ex202 — Display unit
ex302 — LCD control unit
ex313
ex309 — Picture decoding unit
ex308 — Multiplexing/demultiplexing unit
ex201
ex207 — Recording medium
ex307 — Recording and reproducing unit
ex301 — Transmit/receive circuit unit
ex306 — Modem circuit unit
ex205 — Voice Input unit
ex305 — Voice processing unit
ex208 — Voice output unit
ex310 — Power supply circuit unit
To each unit
ex311 — Main control unit
ex304 — Operation input control unit
ex204 — Operation keys
ex312 — Picture coding unit
ex303 — Camera I/F unit
ex203 — Camera unit
ex115

EP 1 432 249 A1

## Fig. 19

ex402

Monitor ex404

Reproducing
apparatus ex403

Satellite ex410

Antenna ex411

Car ex412

Antenna ex406

Car navigation system ex413

Cable ex405

Broadcasting station ex409

Monitor ex408

STBex407

Television ex401

## INTERNATIONAL SEARCH REPORT

| International application No. |
| --- |
| PCT/JP02/08227 |

A. CLASSIFICATION OF SUBJECT MATTER
Int.Cl$^7$ H04N7/32

According to International Patent Classification (IPC) or to both national classification and IPC

B. FIELDS SEARCHED

Minimum documentation searched (classification system followed by classification symbols)
Int.Cl$^7$ H04N7/24-7/68

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 09-322175 A (Sony Corp.), | 1-6,12-14, 23,24,26-28 |
| Y | 12 November, 1997 (12.12.97), Full text | 7-11,15-17, 25,29,30 |
| A | (Family: none) | 18-21 |
| Y | JP 09-130808 A (Kabushiki Kaisha Graphics Communication Laboratories), | 1-6,12-14, 23,24,26-28 |
| Y | 16 May, 1997 (16.05.97), Full text | 7-11,15-17, 25,29,30 |
| A | (Family: none) | 18-21 |
| Y | JP 08-265773 A (Kabushiki Kaisha Graphics Communication Laboratories), | 1-6,12-14, 23,24,26-28 |
| Y | 11 October, 1996 (11.10.96), Full text | 7-11,15-17, 25,29,30 |
| A | (Family: none) | 18-21 |

☒ Further documents are listed in the continuation of Box C.   ☐ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier document but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 12 November, 2002 (12.11.02) | 26 November, 2002 (26.11.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

40

**INTERNATIONAL SEARCH REPORT**

International application No.

PCT/JP02/08227

C (Continuation). DOCUMENTS CONSIDERED TO BE RELEVANT

| Category* | Citation of document, with indication, where appropriate, of the relevant passages | Relevant to claim No. |
|---|---|---|
| Y | JP 09-187007 A (Deutsche Thomson Brandt GmbH.), 15 July, 1997 (15.07.97), Full text & EP 752789 A & DE 19524808 A & US 5838265 A | 7-11,15-17, 25,29,30 |
| Y | JP 06-268992 A (Sony Corp.), 22 September, 1994 (22.09.94), Full text (Family: none) | 7-11,15-17, 25,29,30 |
| Y | JP 06-276482 A (Sony Corp.), 30 September, 1994 (30.09.94), Full text (Family: none) | 7-11,15-17, 25,29,30 |

Form PCT/ISA/210 (continuation of second sheet) (July 1998)